# EUROPÄISCHE PATENTSCHRIFT

(11) **EP 4 060 234 B1**
(45) Veröffentlichungstag und Bekanntmachung des Hinweises auf die Patenterteilung: **17.07.2024**
(21) Anmeldenummer: 22151357.5
(22) Anmeldetag: 13.01.2022
(51) Int. Cl.: F23N 5/08

(54) **FLAMMENWÄCHTER**
FLAME MONITOR
DISPOSITIF DE SURVEILLANCE DE FLAMMES

(30) Priorität: 15.03.2021 DE 102021106263
(43) Veröffentlichungstag der Anmeldung: 21.09.2022
(73) Patentinhaber: Durag GmbH, 22453 Hamburg (DE)
(72) Erfinder: Deselaers, Christian, 22869 Schenefeld (DE)
(74) Vertreter: Eisenführ Speiser

(56) Entgegenhaltungen:
- EP-A1- 2 105 669
- EP-A1- 3 663 646
- US-A1- 2015 159 887
- "D-LX 201 Kompakt-Flammenwächter Flexible und selektive Flammenüberwachung mit Sicherheit", 31 July 2020, DURAG GROUP, article DURAG: "D-LX 201 Kompakt-Flammenwächter Flexible und selektive Flammenüberwachung mit Sicherheit", XP055941528

## Beschreibung

Die Erfindung betrifft einen Flammenwächter zur Überwachung mindestens eines Teilbereichs einer Brennkammer auf das Vorhandensein einer Flamme, aufweisend: einen Flammensensor zum Erfassen einer physikalischen Größe einer Flamme, insbesondere einer Intensität elektromagnetischer Strahlung, und Erzeugen eines zugehörigen elektrischen Sensorsignals, eine dem Flammensensor nachgeschaltete, zweikanalige Auswerteschaltung zum Feststellen, ob das vom Flammensensor erzeugte Sensorsignal einer Flamme entspricht, und zum sicherheitsgerichteten Ausgeben eines das Vorhandensein oder das nicht-Vorhandensein einer Flamme anzeigenden Ausgabesignals, wobei die zweikanalige Auswerteschaltung aufweist: einen zum Verarbeiten des Sensorsignals eingerichteten ersten Kanal, welcher einen ersten Analog-Digital-Wandler in einem Analogkreis, einen einer digitalen Diagnose- und Vergleichseinheit zugehörigen ersten Mikrocontroller zum Auswerten eines von dem ersten Analog-Digital-Wandler erhaltenen ersten Signals, und ein von dem ersten Mikrocontroller gesteuertes erstes Relais in einem Relaiskreis umfasst, und einen zum Verarbeiten des Sensorsignals eingerichteten zweiten Kanal, welcher einen zweiten Analog-Digital-Wandler in dem Analogkreis, einen der digitalen Diagnose- und Vergleichseinheit zugehörigen zweiten Mikrocontroller zum Auswerten eines von dem zweiten Analog-Digital-Wandler erhaltenen zweiten Signals, und ein von dem zweiten Mikrocontroller gesteuertes zweites Relais in dem Relaiskreis umfasst, wobei die Diagnose- und Vergleichseinheit eingerichtet ist zum Durchführen eines Abgleichs eines ersten Auswerteergebnisses des ersten Mikrocontrollers und eines zweiten Auswerteergebnisses des zweiten Mikrocontrollers, und zum Beeinflussen des Ausgabesignals in Abhängigkeit von einem Ergebnis des Abgleichs.

Die Erfindung betrifft weiterhin eine Brennkammer mit einem Flammenwächter der eingangs genannten Art.

Die Erfindung betrifft darüber hinaus ein Verfahren zur Überwachung mindestens eines Teilbereichs einer Brennkammer auf das Vorhandensein einer Flamme, insbesondere mindestens eines Teilbereichs einer Brennkammer der vorstehend genannten Art und/oder mit einem Flammenwächter der eingangs genannten Art, mit den Schritten: Erfassen einer physikalischen Größe einer Flamme, insbesondere einer Intensität elektromagnetischer Strahlung, mittels eines Flammensensors und Erzeugen eines zugehörigen elektrischen Sensorsignals, Feststellen mittels einer dem Flammensensor nachgeschalteten, zweikanaligen Auswerteschaltung, ob das vom Flammensensor erzeugte Sensorsignal einer Flamme entspricht, und sicherheitsgerichtetes Ausgeben eines das Vorhandensein oder das nicht-Vorhandensein einer Flamme anzeigenden Ausgabesignals, Verarbeiten des Sensorsignals in einem ersten Kanal der Auswerteschaltung, mittels eines ersten Analog-Digital-Wandlers in einem Analogkreis, eines einer digitalen Diagnose- und Vergleichseinheit zugehörigen ersten Mikrocontrollers zum Auswerten eines von dem ersten Analog-Digital-Wandler erhaltenen ersten Signals, und mittels eines von dem ersten Mikrocontroller gesteuerten ersten Relais in einem Relaiskreis, und Verarbeiten des Sensorsignals in einem zweiten Kanal der Auswerteschaltung, mittels eines zweiten Analog-Digital-Wandlers in dem Analogkreis, eines der digitalen Diagnose- und Vergleichseinheit zugehörigen zweiten Mikrocontrollers zum Auswerten eines von dem zweiten Analog-Digital-Wandler erhaltenen zweiten Signals, und mittels eines von dem zweiten Mikrocontroller gesteuerten zweiten Relais in dem Relaiskreis, Durchführen eines Abgleichs eines ersten Auswerteergebnisses des ersten Mikrocontrollers und eines zweiten Auswerteergebnisses des zweiten Mikrocontrollers, und Beeinflussen des Ausgabesignals in Abhängigkeit von einem Ergebnis des Abgleichs.

Unter dem Begriff des "sicherheitsgerichteten Ausgebens eines das Vorhandensein oder das nicht-Vorhandensein einer Flamme anzeigendem Ausgabesignals" wird im Zusammenhang mit der vorliegenden Erfindung insbesondere verstanden, dass dann, wenn die Auswerteschaltung auch nur auf einem der beiden Kanäle nicht mehr feststellt, dass das vom Flammensensor erzeugte Sensorsignal einer Flamme entspricht, die Auswerteschaltung in der Lage ist, bevorzugt nach einer vorbestimmten Detektionszeit bei Flammenausfall, bspw. etwa 1 s bis etwa 5 s, ein das nicht-Vorhandensein einer Flamme anzeigendes Ausgabesignal auszugeben.

Unter dem Begriff des "Beeinflussens des Ausgabesignals in Abhängigkeit von einem Ergebnis des Abgleichs" wird im Zusammenhang mit der vorliegenden Erfindung insbesondere verstanden, dass bei einem negativen Ergebnis des Abgleichs des ersten Auswerteergebnisses des ersten Mikrocontrollers mit dem zweiten Auswerteergebnis des zweiten Mikrocontrollers das Ausgabesignal insbesondere einen Fehl-Stop oder eine Störabschaltung signalisieren kann. Unter einem "negativen Ergebnis des Abgleichs" wird im Zusammenhang mit der vorliegenden Erfindung insbesondere verstanden, dass das Auswerteergebnis des ersten Mikrocontrollers, bevorzugt auch nach Berücksichtigung einer Toleranzabweichung, von dem Auswerteergebnis des zweiten Mikrocontrollers abweicht. Unter einem "Fehl-Stop" bzw. einer "Störabschaltung" wird im Zusammenhang mit der vorliegenden Erfindung insbesondere verstanden, dass das Ausgabesignal aufgrund der vorgenannten Abweichung, aufgrund eines sonstigen, von der Auswerteschaltung festgestellten Fehlers bzw. einer sonstigen Störung in der Auswerteschaltung, aus Sicherheitsgründen ein das nicht-Vorhandensein einer Flamme anzeigendes Ausgabesignal ausgibt. Unter sonstigen Fehlern bzw. sonstigen Störungen der Auswerteschaltung werden insbesondere die in der vorliegenden Offenbarung beschriebenen Fehler bzw. Störungen verstanden. Flammenwächter der eingangs genannten Art sind aus dem Stand der Technik bekannt. Beispielsweise handelt es sich bei dem Flammenwächter "D-LX 201" der DURAG Group um einen Flammenwächter der vorstehend genannten Art. Ein redundanter Vergleich von zwei physikalischen Größen einer Flamme mit einem zugehörigen Erwartungswert über zusätzliche mikrocontrollerfreie Schaltungszweige ist aus EP 2 105 669 A1 bekannt.

Aufgabe der vorliegenden Erfindung ist es, Flammenwächter, Brennkammern und/oder Verfahren der vorstehend genannten Art zu verbessern. Insbesondere ist es eine Aufgabe der vorliegenden Erfindung Flammenwächter, Brennkammern und/oder Verfahren der vorstehend genannten Art bereitzustellen, die eine erhöhte Verfügbarkeit der mit diesen ausgestatteten Brennkammern und Feuerungs- bzw. Prozessanlagen ermöglichen, ohne die Sicherheitsanforderungen an diese Flammenwächter, Brennkammern und/oder Verfahren zu kompromittieren.

Diese Aufgabe wird durch die Gegenstände der unabhängigen Ansprüche gelöst.

Die Erfindung stellt insbesondere einen Flammenwächter der eingangs genannten Art zur Verfügung, der sich dadurch auszeichnet, dass die Diagnose- und Vergleichseinheit eingerichtet ist zum Vergleichen eines von einem der beiden Kanäle erhaltenen Signals mit einem zugehörigen Erwartungswert, sowohl mithilfe des ersten Mikrocontrollers als auch mithilfe des zweiten Mikrocontrollers, und zum optionalen Initiieren eines Fehl-Weiterbetriebsmodus (englisch: fail operational mode) der Auswerteschaltung in Abhängigkeit von einem Ergebnis des Vergleichens. Die Erfindung stellt darüber hinaus eine Brennkammer mit einem derartigen Flammenwächter zur Verfügung.

Weiterhin stellt die Erfindung insbesondere auch ein Verfahren der vorstehend genannten Art zur Verfügung, gekennzeichnet durch die Schritte des Vergleiches eines von einem der beiden Kanäle erhaltenen Signals mit einem zugehörigen Erwartungswert, sowohl mithilfe des ersten Mikrocontrollers als auch mithilfe des zweiten Mikrocontrollers, und des optionalen Initiierens eines Fehl-Weiterbetriebsmodus der Auswerteschaltung in Abhängigkeit von einem Ergebnis des Vergleichens.

Unter dem Begriff des "Fehl-Weiterbetriebsmodus" wird im Zusammenhang mit der vorliegenden Erfindung insbesondere verstanden, dass die Auswerteschaltung trotz eines negativen Ergebnisses des Abgleichs des ersten Auswerteergebnisses des ersten Mikrocontrollers mit dem zweiten Auswerteergebnis des zweiten Mikrocontrollers in der Lage ist, nicht zwangsläufig ein Fehl-Stop-Signal oder ein Störabschaltungssignal als Ausgabesignal der Auswerteschaltung auszulösen, sondern, bevorzugt zumindest für einen vordefinierten Zeitraum, mittels des Ausgabesignals weiterhin das Vorhandensein einer Flamme anzuzeigen.

Unter dem Begriff des "optionalen Initiierens" eines Fehl-Weiterbetriebsmodus wird im Zusammenhang mit der vorliegenden Erfindung verstanden, dass die Auswerteschaltung, bei einem Auftreten eines Fehlers in dem in jeweiligen Kanal, das Ausgabesignal nicht zwangsläufig, zumindest nicht sofort, so ausgibt, dass dieses das nicht-Vorhandensein einer Flamme anzeigt. Vielmehr hat die Auswerteschaltung durch das optionale Initiieren des Fehl-Weiterbetriebsmodus zwar weiterhin die Möglichkeit unter bestimmten, in der vorliegenden Offenbarung beschriebenen Umständen einen Fehl-Stop auszulösen, hat jedoch andererseits erfindungsgemäß auch die Möglichkeit, in einem Fehl-Weiterbetriebsmodus einen, bevorzugt zeitlich befristeten, Weiterbetrieb zumindest eines durch den Flammenwächter überwachten Teilbereichs einer Brennkammer oder auch der ganzen Brennkammer, insbesondere unter den in der vorliegenden Erfindung genannten Bedingungen, bspw. unter Verwendung des anderen der beiden Kanäle, zu ermöglichen. Während des Fehl-Weiterbetriebsmodus wird vom Flammenwächter also weiterhin ein Ausgabesignal erzeugt, welches das Vorhandensein einer Flamme signalisiert.

Ein Vorteil der Erfindung liegt unter anderem darin, dass durch das Vergleichen eines von einem der beiden Kanäle erhaltenen Signals mit einem zugehörigen Erwartungswert beispielsweise festgestellt werden kann, dass dieser Kanal fehlerhaft ist, wenn der Vergleich ergibt, dass das erhaltene Signal nicht dem Erwartungswert entspricht. Gleichzeitig erfolgt das Vergleichen erfindungsgemäß sowohl mithilfe des ersten Mikrocontrollers als auch mithilfe des zweiten Mikrocontrollers. Dadurch wird vorteilhaft ausgeschlossen, dass der in diesem Kanal festgestellte Fehler bei einem der Mikrocontroller der Diagnose- und Vergleichseinheit liegt. Somit kann die Erfindung feststellen, dass der Fehler in einem analogen Abschnitt oder in analogen Teilen dieses Kanals liegt. Dabei berücksichtigt die Erfindung bevorzugt auch, dass ein Teil des Analog-Digital-Wandlers in dem jeweiligen Kanal analog ist, aber auch einen digitalen Teil aufweist, das heisst eine digitale Verarbeitung sowie die Weiterleitung von digitalen Signalen beinhaltet, deren Fehler bevorzugt ebenfalls von der Diagnose- und Vergleichseinheit bzw. den beiden Mikrocontrollern berücksichtigt werden, also bevorzugt ebenfalls zum Bereich des einkanaligen Weiterbetriebs zählen. Dadurch bietet die Erfindung die Option, einen Fehl-Weiterbetriebsmodus der Auswerteschaltung zu initiieren, ohne die Sicherheitsanforderungen an den Flammenwächter zu kompromittieren. Denn Dank der Erfindung kann die Auswerteschaltung in diesem Fall erkennen, dass zumindest die Möglichkeit besteht, dass nur der untersuchte Kanal einen Fehler aufweist, die Flamme jedoch weiterhin vorhanden ist.

Dieser Weiterbetriebsmodus ist von großem Vorteil. Denn die vorliegende Erfindung hat erkannt, dass die eingangs genannten Flammenwächter nahezu ausschließlich in Brennkammern großtechnischer Anlagen zum Einsatz kommen. Es handelt sich dabei beispielsweise um komplexe Feuerungsanlagen oder um Feuerungsprozesse im Dauerbetrieb mit einer Vielzahl möglicher Brennstoffe, wie beispielsweise Gas, Öl, Braunkohle oder Steinkohle. Es kann sich aber auch um Hochöfen der Stahlindustrie, Chemieanlagen, Müllverbrennungsanlagen oder Zementherstellungsanlagen handeln. Die Erfindung hat nun erkannt, dass all diesen großtechnischen Verbrennungsprozessen gemein ist, dass es zum einen aus Sicherheitsgründen von höchster Wichtigkeit ist, dass dann, wenn die Auswerteschaltung auf einem der beiden Kanäle nicht mehr feststellt, dass das vom Flammensensor erzeugte Sensorsignal einer Flamme entspricht, die Auswerteschaltung ein das nicht-Vorhandensein einer Flamme anzeigendes Ausgabesignal erzeugt und ausgibt, so dass durch dieses bspw. ein Ventil einer Brennstoffzufuhr zu der Brennkammer geschlossen werden kann. Auf diese Weise wird verhindert, dass weiter Brennstoff, bspw. Gas, in der Brennkammer strömt, obwohl die Flamme in der Brennkammer möglicherweise erloschen ist.

Die Erfindung hat aber gleichzeitig erkannt, dass all diesen großtechnischen Verbrennungsprozessen ebenfalls gemein ist, dass ein Abschalten und insbesondere das Hochfahren derartiger Anlagen mit enormen Kosten verbunden ist. Somit liegt ein großer Vorteil der Erfindung darin, dass durch den optionalen Fehl-Weiterbetriebsmodus ein Weiterbetrieb der Brennkammer möglich ist. Somit wird die Verfügbarkeit der Anlagen erhöht. Während dieses Weiterbetriebs der Brennkammer lässt sich bspw. vorteilhaft feststellen, ob der andere Kanal das Vorhandensein einer Flamme anzeigt. Wenn dies der Fall ist, kann ein Weiterbetrieb im Fehl-Weiterbetriebsmodus bspw. bis zu einer Reparatur des fehlerhaften Kanals erfolgen. Mit anderen Worten: Falls ein fehlerfreier Kanal das Vorhandensein einer Flamme ("Flamme Ein") erkennt, dann kann dies auch trotz eines Fehlers im redundanten Kanal weiterhin nach aussen signalisiert werden bzw. die Brennstoffzufuhr aufrechterhalten werden. Grundsätzlich gibt es die Möglichkeit, in einen Fehl-Weiterbetriebsmodus zu wechseln, auch in einem Zustand "Flamme Aus". Es ist keine zwingende Bedingung, dass der Flammenwächter in einem Zustand "Flamme Ein" ist, damit in einen Fehl-Weiterbetriebsmodus gewechselt wird. Damit ist ein Betreiber der Brennkammer dann vorteilhaft in der Lage, trotz eines Fehlers im Flammenwächter den Brenner zu starten bzw. diesem Brennstoff zuzuführen. Die Erfindung betrifft einen Flammenwächter bzw. ein Verfahren zur Überwachung mindestens eines Teilbereichs einer Brennkammer auf das Vorhandensein einer Flamme. Dies umfasst somit beliebige Teile bzw. Teilbereiche der Brennkammer, aber auch die ganze Brennkammer, das heisst ob irgendwo in der Brennkammer eine Flamme vorhanden ist.

Die Erfindung umfasst somit vorteilhaft insbesondere auch unterschiedliche Sicherheitsauswertungen: In einem Fall wird bspw. überprüft, dass eine Flamme in einem bestimmten Teilbereich der Brennkammer vorhanden ist, bspw. in einem einem bestimmten Brenner der Brennkammer zugeordneten Teilbereich der Brennkammer, also eine Einzelbrennerüberwachung erfolgt. In einem anderen Fall wird bspw. bevorzugt überprüft, ob überhaupt irgendwo eine Flamme in der Brennkammer ist. Es wird also eine Brennkammerüberwachung der ganzen Brennkammer vorgenommen. Hierzu kann der Flammensensor bevorzugt mit einem Sichtkegel oder Sichtfeld mit einem bestimmten Öffnungswinkel in die Brennkammer blicken. Dabei kann der Flammensensor bevorzugt so eingerichtet und in seiner Empfindlichkeit so ausgerüstet bzw. eingestellt sein, dass ein zugehöriges elektrisches Sensorsignal entsprechend einer in dem für die Flamme vorgesehenen Teilbereich der Brennkammer herrschenden elektromagnetischen Strahlung erzeugt wird. Dieser Teilbereich kann bevorzugt ein einem bestimmten Brenner der Brennkammer zugeordneter Teilbereich sein. Der Flammensensor kann aber bspw. bevorzugt auch so eingerichtet und in seiner Empfindlichkeit so ausgerüstet bzw. eingestellt sein, dass ein zugehöriges elektrisches Sensorsignal erzeugt wird, wenn irgendwo in der Brennkammer eine Flamme auf der Basis entsprechender elektromagnetischer Strahlung erfasst wird, somit also die Brennkammer als ganzes überwacht wird.

Bei einer Ausführungsform der Erfindung kann das Vergleichen eines von einem der beiden Kanäle erhaltenen Signals mit einem zugehörigen Erwartungswert getriggert durch das Ergebnis des Abgleichs der ersten und zweiten Auswerteergebnisse von erstem bzw. zweitem Mikrocontroller bezüglich des ersten von dem ersten Analog-Digital-Wandler bzw. des zweiten von dem zweiten Analog-Digital-Wandler erhaltenen Signals vorgenommen werden. Mit anderen Worten wird bei dieser Ausführungsform das Vergleichen eines von einem der beiden Kanäle erhaltenen Signals mit dem zugehörigen Erwartungswert mithilfe der beiden Mikrocontroller bspw. erst dann vorgenommen, wenn das Ergebnis des Abgleichs der Auswerteergebnisse der von den beiden Analog-Digital-Wandlern erhaltenen Signale einen, bevorzugt oberhalb einer Toleranzgrenze, liegenden Unterschied dieser beiden Signale anzeigt.

Die Tatsache eines solchen Unterschieds zeigt an, dass in einem der beiden Kanäle ein Fehler vorliegt. Somit wird bei dieser Ausführungsform erst dann der erfindungsgemäße Vergleich eines von einem der beiden Kanäle erhaltenen Signals mit einem Erwartungswert durchgeführt, wenn eine solche Fehlermeldung vorliegt. Auf diese Weise lässt sich insbesondere Verarbeitungskapazität bei den beteiligten elektronischen Verarbeitungskomponenten einsparen. Denn der erfindungsgemäße Vergleich eines von einem der beiden Kanäle erhaltenen Signals mit einem zugehörigen Erwartungswert läuft bei dieser Ausführungsform nicht ständig mit.

Sowohl in dem Fall, dass das erfindungsgemäße Vergleichen eines von einem der beiden Kanäle erhaltenden Signals mit einem zugehörigen Erwartungswert unabhängig von einem Auswerteergebnis der Sensorsignale erfolgt, als auch in dem vorstehenden Fall der Ausführungsform, in der dieser Vergleich nur getriggert durch das Ergebnis des Abgleichs der Auswerteergebnisse erfolgt, profitiert die Erfindung davon, dass das Vergleichen erfindungsgemäß sowohl mithilfe des ersten Mikrocontrollers als auch mithilfe des zweiten Mikrocontroller erfolgte, so dass vorteilhaft vor einem Initiieren des Fehl-Weiterbetriebsmodus ausgeschlossen wurde, dass ein Fehler bei einem der Mikrocontroller der Diagnose- und Vergleichseinheit liegt.

Es ist somit vorteilhaft möglich, zumindest einen von dem erfindungsgemäßen Flammenwächter überwachten Teilbereich der Brennkammer oder auch die ganze Brennkammer, bevorzugt zumindest innerhalb einer vordefinierten Zeit von bspw. etwa 24h, mit einem Fehl-Weiterbetriebsmodus des Flammenwächters weiter zu betreiben, indem bspw. der andere der beiden Kanäle für die Auswertung des Sensorsignals des Flammensensors verwendet wird. Sollte dieser andere Kanal das Vorhandensein einer Flamme anzeigen, so könnte, bevorzugt für die vordefinierte Zeit, ein Weiterbetrieb der überwachten Brennkammer erfolgen, bis bspw. eine Reparatur bzw. ein Zurücksetzen des fehlerhaften Kanals erfolgt ist. Sollte jedoch der andere Kanal nicht das Vorhandensein einer Flamme anzeigen, dann würde die Auswerteschaltung ein das nicht-Vorhandensein einer Flamme anzeigendes Ausgabesignal ausgeben, mit dessen Hilfe dann bspw. ein Ventil geschlossen und die Brennstoffzufuhr zu der überwachten Brennkammer gestoppt werden kann, so dass durch die erfindungsgemäße Option eines Initiierens des Fehl-Weiterbetriebsmodus das Sicherheitsniveau des erfindungsgemäßen Flammenwächters nicht kompromittiert wird. Es ist jedoch auch vorteilhaft möglich, den Fehl-Weiterbetriebsmodus zu aktivieren, wenn im Zustand "Flamme Aus" ein Fehler in einem der beiden Kanäle erkannt wird. Damit ist ein Betreiber der Brennkammer dann vorteilhaft in der Lage, trotz eines Fehlers im Flammenwächter den Brenner zu starten bzw. diesem Brennstoff zuzuführen.

Eine bevorzugte Ausführungsform der Erfindung zeichnet sich dadurch aus, dass die Diagnose- und Vergleichseinheit eingerichtet ist, dass das Initiieren des Fehl-Weiterbetriebsmodus nur erfolgt, wenn sowohl mithilfe des ersten Mikrocontrollers als auch mithilfe des zweiten Mikrocontrollers das Ergebnis des Vergleichens ist, dass das mit dem Erwartungswert verglichene Signal, bevorzugt nach Berücksichtigung einer Toleranzabweichung, von dem Erwartungswert abweicht. Auf diese Weise wird vorteilhaft sichergestellt, dass der Fehl-Weiterbetriebsmodus nicht initiiert wird, wenn beispielsweise nur mithilfe eines der beiden Mikrocontroller das Ergebnis des Vergleichens ist, dass das mit dem Erwartungswert verglichene Signal von dem Erwartungswert abweicht. Denn in einem solchen Fall liegt ein Fehler in einem der beiden Mikrocontroller der Diagnose- und Vergleichseinheit vor. In einem solchen Fall soll kein Weiterbetrieb erfolgen.

Vielmehr soll aus Sicherheitsgründen ein Fehl-Weiterbetrieb des Flammenwächters bzw. das Betreiben des Flammenwächters in einem Fehl-Weiterbetriebsmodus bevorzugt nur dann erfolgen, wenn die Diagnose- und Vergleichseinheit fehlerfrei ist. Dies ist bspw. dann bestätigt, wenn sowohl mithilfe des ersten Mikrocontrollers als auch mithilfe des zweiten Mikrocontrollers das Ergebnis des Vergleichens ist, dass das mit dem Erwartungswert verglichene Signal, bevorzugt nach Berücksichtigung einer Toleranzabweichung von bspw, etwa 3 s, von dem Erwartungswert abweicht. Gleichzeitig ist in einem solchen Fall vorteilhaft festgestellt, dass in diesem der beiden Kanäle außerhalb der Diagnose- und Vergleichseinheit ein Fehler vorliegt. Sollte dann beispielsweise bei einer zweiten Messung mit dem anderen der beiden Kanäle festgestellt werden, dass dort beide Vergleichsergebnisse mit dem Erwartungswert übereinstimmen, so bietet dadurch diese Ausführungsform die Möglichkeit, einen Fehler einem der beiden Kanäle eindeutig zuzuordnen und gleichzeitig auszuschließen, dass der Fehler in der Diagnose- und Vergleichseinheit selbst liegt.

Eine weitere Ausführungsform der vorliegenden Erfindung zeichnet sich dadurch aus, dass die Diagnose- und Vergleichseinheit eingerichtet ist, dass kein Initiieren des Fehl-Weiterbetriebsmodus erfolgt, sondern, bevorzugt nach einer vordefinierten Fehlertoleranzzeit, ein Auslösen eines Fehl-Stop (englisch: fail stop) durch die Auswerteschaltung erfolgt, wenn entweder nur mithilfe des ersten Mikrocontrollers oder nur mithilfe des zweiten Mikrocontrollers das Ergebnis des Vergleichens ist, dass das mit dem Erwartungswert verglichene Signal, bevorzugt nach Berücksichtigung einer Toleranzabweichung, von dem Erwartungswert abweicht. In diesem Fall weist einer der beiden Mikrocontrollers der Diagnose- und Vergleichseinheit und somit die Diagnose- und Vergleichseinheit einen Fehler auf und ist somit nicht mehr fehlerfrei. Somit bietet diese Ausführungsform den Vorteil, unabhängig von einem Ergebnis eines Abgleichs der Auswertung der beiden Sensorsignale einen Fehl-Stop anzuzeigen. Denn bei einer fehlerhaften Diagnose- und Vergleichseinheit ist keine ordnungsgemäße Auswertung der Sensorsignale vom Flammensensor mehr möglich.

Genauer gesagt, kann mit dieser Ausführungsform vorteilhaft ein Fehl-Stop unabhängig davon ausgelöst werden, ob der Abgleich des ersten Auswerteergebnisses des ersten Mikrocontrollers bezüglich des von dem ersten Analog-Digital-Wandler erhaltenen ersten Signals und des zweiten Auswerteergebnisses des zweiten Mikrocontrollers bezüglich des von dem zweiten Analog-Digital-Wandler erhaltenen zweiten Signals Unterschiede in diesen ersten und zweiten Signalen und somit gegebenenfalls einen Ausfall der Flamme anzeigt. Mit anderen Worten erhöht diese Ausführungsform der Erfindung die Sicherheit des erfindungsgemäßen Flammenwächters nochmals, da sie eine ständige Überwachung der Diagnose- und Vergleichseinheit und ein entsprechendes Auslösen eines Fehl-Stop durch die Auswerteschaltung bzw. des erfindungsgemäßen Flammenwächters und somit ein Abschalten der Brennstoffzufuhr ermöglicht. Auf diese Weise bietet diese Ausführungsform der Erfindung im Rahmen des sicherheitsgerichteten Ansteuerns des Aktors durch die Auswerteschaltung die Möglichkeit eines Abschaltens der Brennstoffzufuhr nicht nur bei unterschiedlichen Auswerteergebnissen aus erstem und zweitem Mikrocontroller, sondern zusätzlich auch die Möglichkeit eines Abschaltens der Brennstoffzufuhr bei einem Fehler in der Diagnose- und Vergleichseinheit.

Eine Ausführungsform der Erfindung zeichnet sich dadurch aus, dass das von einem der beiden Kanäle erhaltene Signal ein von dem Analog-Digital-Wandler in diesem Kanal erhaltenes Signal ist. Diese Ausführungsform ermöglicht vorteilhaft ein einfaches Erkennen von Fehlern in dem einen von beiden Mikrocontrollern eingelesenen Signal bspw. durch ein Erkennen einer Signalübersteuerung oder durch ein Erkennen von harmonischen Signalen in dem vom Analog-Digital-Wandler erhaltenen Signal, oder in dem erkannt wird, dass keine gültigen Werte von dem Analog-Digital-Wandler erhalten werden. Letzteres ist bspw. dann der Fall, wenn eine Datensicherung auf einer digitalen Kommunikation zwischen dem Analog-Digital-Wandler und einem oder beiden Mikrocontroller einen Fehler anzeigt.

Bei einer Ausführungsform der Erfindung ist ein in dem Analogkreis vor dem ersten Analog-Digital-Wandler in dem ersten Kanal angeordneter und von der Diagnose- und Vergleichseinheit schaltbarer erster Analogumschalter und ein in dem Analogkreis vor dem zweiten Analog-Digital-Wandler in dem zweiten Kanal angeordneter und von der Diagnose- und Vergleichseinheit schaltbarer zweiter Analogumschalter vorgesehen, wobei die Diagnose- und Vergleichseinheit eingerichtet ist, mittels Umschalten des ersten und/oder des zweiten Analogumschalters dem jeweiligen Analog-Digital-Wandler, bevorzugt begrenzt auf einen vordefinierten Testzeitraum, statt des Sensorsignals ein, bevorzugt eine vordefinierte Amplitude und/oder eine vordefinierte Frequenz aufweisendes, Testsignal zum Testen dieses Analog-Digital-Wandlers zuzuführen.

Bei dieser Ausführungsform wird die Diagnose eines der beiden Kanäle vorteilhaft mithilfe eines separaten Testsignals vorgenommen. Dieses Testsignal wird bevorzugt durch zumindest einen Testsignalgenerator in zumindest einem der beiden Mikrocontroller erzeugt. Hierfür wird bei dieser Ausführungsform der Erfindung das, gegebenenfalls durch einen entsprechenden Verstärker vorverarbeitete, vom Flammensensor stammende Sensorsignal in dem jeweiligen Kanal nicht direkt an den Analog-Digital-Wandler geführt, sondern über einen in dem jeweiligen Kanal vorgesehenen Analogumschalter. Auf diese Weise ist es erfindungsgemäß möglich, mittels Umschalten des jeweiligen ersten und/oder zweiten Analogumschalters dem jeweiligen Analog-Digital-Wandler, bevorzugt begrenzt auf einen vordefinierten Testzeitraum von bspw. etwa 100 ms bis etwa 1000 ms, statt des Sensorsignals das Testsignal zur Verfügung zu stellen. Mithilfe dieses Testsignals wird der jeweilige Analog-Digital-Wandler erfindungsgemäß getestet bzw. diagnostiziert. Denn das vom jeweiligen Analog-Digital-Wandler aus dem Testsignal gewandelte digitale Signal wird erfindungsgemäß beiden Mikrocontrollern der Diagnose- und Vergleichseinheit zugeführt, so dass der erfindungsgemäße Vergleich dieses Signals mit einem zugehörigen Erwartungswert durchgeführt werden kann. Erfindungsgemäß kann somit entweder festgestellt werden, dass der Kanal, insbesondere der getestete Analog-Digital-Wandler, fehlerfrei ist, da das vom Analog-Digital-Wandler erhaltene Signal dem zugehörigen Erwartungswert entspricht, oder es kann ein Fehl-Weiterbetriebsmodus durch die Auswerteschaltung initiiert werden, wenn das erhaltene Signal sowohl mithilfe des ersten als auch mithilfe des zweiten Mikrocontrollers dem zugehörigen Erwartungswert, auch nach Abzug einer entsprechenden Toleranzabweichung, nicht entspricht.

Der zugehörige Erwartungswert kann bei dieser Ausführungsform bspw. ein bestimmtes Testmuster sein. Bevorzugt wird der Erwartungswert bzw. das Testmuster über einen internen Datenaustausch zwischen den beiden Mikrocontrollern ausgetauscht, sodass beide Mikrocontroller über den identischen Erwartungswert bzw. über das identische Testmuster verfügen.

Bevorzugt gibt es nur einen einzigen Testsignalgenerator bzw. nur eine einzige Testsignalquelle für das Testsignal. Auf diese Weise wird vorteilhaft das Sicherheitsniveau des erfindungsgemäßen Flammenwächters auch auf den Testsignalgenerator erstreckt. Denn kommt es zu einem Fehler bei der Testsignalerzeugung, so schlägt nicht nur der Test eines der beiden Analog-Digital-Wandler fehl, sondern es kommt aufgrund des Fehlers bei der Testsignalerzeugung auch bei einem nachfolgenden Test des anderen Kanals zu einer Abweichung von dem Erwartungswert, so dass es spätestens dann bevorzugt ein Fehl-Stop durch die Auswerteschaltung bzw. durch den Flammenwächter ausgelöst wird. Dies ist vorteilhaft, da auch die Testsignalerzeugung bzw. der Testsignalgenerator zu der Diagnose- und Vergleichseinheit zählt, die zum Halten des hier bevorzugt angestrebten Sicherheitsniveaus fehlerfrei sein soll.

Das Testsignal dieser Ausführungsform wird an den jeweiligen Analogumschalter geführt. Der jeweilige Analogumschalter dient der Wegschaltung oder Umschaltung des jeweiligen Sensorsignals. Bevorzugt wird vor dem Start einer Testsequenz das jeweilige Sensorsignal durch den jeweiligen Analogumschalter in diesem Kanal weggeschaltet und stattdessen das Testsignal über den jeweiligen Analogumschalter an den jeweiligen Analog-Digital-Wandler geführt.

Die vorstehend beschriebenen, ein Testsignal verwendenden Ausführungsformen der Erfindung bieten insbesondere den Vorteil, dass ein Test insbesondere des Analog-Digital-Wandlers in einem bestimmten Kanal unabhängig von einem Sensorsignal in dem jeweiligen Kanal vorgenommen werden kann.

Eine Ausführungsform der Erfindung zeichnet sich dadurch aus, dass der erste Analogumschalter von dem ersten Mikrocontroller über eine erste Steuerleitung umschaltbar ist, der zweite Analogumschalter von dem zweiten Mikrocontroller über eine zweite Steuerleitung umschaltbar ist, ein Zustand der ersten Steuerleitung über eine erste Rückleseleitung zu dem zweiten Mikrocontroller von diesem durch Vergleichen mit einem ersten Steuerleitungserwartungszustand überwachbar ist, ein Zustand der zweiten Steuerleitung über eine zweite Rückleseleitung zu dem ersten Mikrocontroller von diesem durch Vergleichen mit einem zweiten Steuerleitungserwartungszustand überwachbar ist, und wobei, bevorzugt nach einer vordefinierten Rücklesefehlertoleranzzeit von bspw. etwa 1 ms bis etwa 100 ms, ein Auslösen eines Fehl-Stop der Auswerteschaltung erfolgt, wenn der Zustand der ersten Steuerleitung, bevorzugt nach Berücksichtigung einer Toleranzabweichung, von dem ersten Steuerleitungserwartungszustand, und/oder der Zustand der zweiten Steuerleitung, bevorzugt nach Berücksichtigung einer Toleranzabweichung, von dem zweiten Steuerleitungserwartungszustand abweicht. Diese Ausführungsform bietet insbesondere den Vorteil, dass die jeweilige für einen Analogumschalter in einem der Kanäle vorgesehene Steuerleitung über eine zugeordnete Rückleseleitung mithilfe des Mikrocontrollers des anderen Kanals überwachbar ist. Auf diese Weise wird vorteilhaft ausgeschlossen, dass der jeweilige Analogumschalter fehlerhaft angesteuert wird und auf diese Weise einen Fehler verursacht.

Eine bevorzugte Ausführungsform der Erfindung zeichnet sich dadurch aus, dass in dem ersten Kanal ein von der Diagnose- und Vergleichseinheit steuerbarer erster Zusatzanalogumschalterzum Wegschalten des Testsignals in dem ersten Kanal, und in dem zweiten Kanal ein von der Diagnose- und Vergleichseinheit steuerbarer zweiter Zusatzanalogumschalter zum Wegschalten des Testsignals in dem zweiten Kanal vorgesehen ist. Die Vorteile dieser Ausführungsform liegen insbesondere darin, dass durch das Vorsehen eines den jeweiligen Analogumschalters zugeordneten Zusatzanalogumschalters eine Zweitfehlersicherheit zur Verfügung gestellt wird. Denn es wäre möglich, dass ein Erstfehler unentdeckt bliebe so dass dann innerhalb von 24 Stunden ein beliebiger weiterer Fehler auftreten könnte. Als Folge einer solchen Situation könnte bspw. das vorstehend beschriebene Testsignal eine Flamme simulieren, was ein gefährlicher, d.h. ein das Sicherheitsniveau des erfindungsgemäßen Flammenwächters kompromittierender, Fehler wäre.

Eine bevorzugte Ausführungsform der Erfindung zeichnet sich dadurch aus, dass die Diagnose- und Vergleichseinheit eingerichtet ist, vor einem Zuschalten des Sensorsignals nach einem Wegschalten des Testsignals in einem ausgewählten Kanal, mittels beider Mikrocontroller in dem ausgewählten Kanal zu überprüfen, ob das Testsignal weggeschaltet ist und ob in dem ausgewählten Kanal der jeweilige Zusatzanalogumschalter zum Wegschalten des Testsignals funktioniert. Diese Ausführungsform bietet die zusätzliche Sicherheit, dass bspw. ein Testsignal zum Prüfen eines bestimmten Signals nicht außerhalb einer entsprechenden Testphase bzw. außerhalb eines entsprechenden Testzeitraums zu dem jeweiligen Analog-Digital-Wandler gelangen kann und somit fehlerhaft eine Flamme simulieren kann.

Eine bevorzugte Ausführungsform der Erfindung zeichnet sich dadurch aus, dass das von einem der beiden Kanäle erhaltene Signal ein von dem Relais in diesen Kanal erhaltenes Signal ist. Hierdurch lässt sich vorteilhaft auch der Relaiskreis des erfindungsgemäßen Flammenwächters bzw. ein bestimmtes Relais überprüfen bzw. diagnostizieren. Dabei ist es bevorzugt, wenn das von dem Relais erhaltene Signal ein von einem Rücklesekontakt des Relais erhaltene Signal ist. Auf diese Weise lässt sich das erfindungsgemäße Erhalten eines mittels der beiden Mikrocontroller mit einem zugehörigen Erwartungswert zu vergleichenden Signals besonders einfach realisieren. Denn durch den Rücklesekontakt kann mithilfe der beiden Mikrocontroller einfach überprüft werden, ob der Lastkontakt des jeweiligen Relais, der die sicherheitsrelevante Flammenmeldung des Flammenwächters über das Ausgabesignal nach Außen meldet, korrekt schaltet.

Eine bevorzugte Ausführungsform der Erfindung zeichnet sich dadurch aus, dass das erste Relais von dem ersten Mikrocontroller über eine erste Relaissteuerleitung steuerbar ist, das, bevorzugt in Reihe zum ersten Relais geschaltete, zweite Relais von dem zweiten Mikrocontroller über eine zweite Relaissteuerleitung steuerbar ist, ein Zustand der ersten Relaissteuerleitung über eine erste Relaisrückleseleitung zu dem zweiten Mikrocontroller von diesem durch Vergleichen mit einem ersten Relaissteuerleitungserwartungszustand überwachbar ist, ein Zustand der zweiten Relaissteuerleitung über eine zweite Relaisrückleseleitung zu dem ersten Mikrocontroller von diesem durch Vergleichen mit einem zweiten Relaissteuerleitungserwartungszustand überwachbar ist, und wobei, bevorzugt nach einer vordefinierten Rücklesefehlertoleranzzeit von bspw. etwa 3 s, ein Auslösen eines Fehl-Stop der Auswerteschaltung erfolgt, wenn der Zustand der ersten Relaissteuerleitung, bevorzugt nach Berücksichtigung einer Toleranzabweichung, von dem ersten Relaissteuerleitungserwartungszustand, und/oder der Zustand der zweiten Relaissteuerleitung, bevorzugt nach Berücksichtigung einer Toleranzabweichung, von dem zweiten Relaissteuerleitungserwartungszustand abweicht.

Diese Ausführungsform bietet insbesondere den Vorteil, dass mit ihr eine zusätzliche Unterscheidung von Fehlern in einem Relaiskanal von Fehlern in der Diagnose- und Vergleichseinheit bzw. in einem der Mikrocontroller möglich ist. Denn bei dieser Ausführungsform liest der jeweils andere Mikrocontroller der Diagnose- und Vergleichseinheit die jeweilige Relaissteuerleitung des jeweiligen Flammenrelais über eine zugeordnete Relaisrückleseleitung zurück. Weicht der auf diese Weise rückgelesene Zustand der jeweiligen Relaissteuerleitung von einem zugeordneten Relaissteuerleitungserwartungszustand ab, so wird bevorzugt von einem Fehler in der Diagnose- und Vergleichseinheit ausgegangen, so dass ein Fehl-Stop durch die Auswerteschaltung, bevorzugt innerhalb einer kurzen Fehlertoleranzzeit, ausgelöst werden kann.

Andererseits, wenn in den Relaissteuerleitungen keine Abweichung von den jeweiligen Relaissteuerleitungserwartungszuständen festgestellt wird, kann, wenn mithilfe des ersten als auch des zweiten Mikrocontrollers das Ergebnis eines Vergleichens eines von einem der beiden Kanäle erhaltenen Signals mit einem zugehörigen Erwartungswert eine Abweichung ergibt, ein Fehl-Weiterbetriebsmodus initiiert werden. Dabei wird vorteilhaft die Ansteuerung des jeweiligen Relais nicht verändert. Weiterhin kann der Flammenwächter im Falle eines dauerhaften geschlossenen Lastkontakts des jeweiligen Relais nach wie vor eine korrekte Flammenmeldung bzw. Flammenabmeldung durch das Ausgabesignal nach Außen über einen entsprechenden sicherheitsrelevanten Relaisausgang des Flammenwächters signalisieren. Auf der anderen Seite ist es von Vorteil, dass, im Falle eines Defekts des jeweiligen Rücklesekontakts, das jeweilige Relais lastseitig weiterhin korrekt schaltet, so dass weiterhin die korrekte Flammenmeldung über den entsprechenden sicherheitsrelevanten Ausgang des Flammenwächters durch das Ausgabesignal nach Außen hin signalisiert werden kann.

Bevorzugt werden bei dieser Ausführungsform zwei zwangsgeführte Relais in Reihe verwendet, so dass zum Halten der gewünschten Redundanz beim Ausfall bzw. bei einem nicht korrekten Schalten eines der Relais das andere Relais weiterhin zur Verfügung steht.

Eine bevorzugte Ausführungsform der Erfindung weißt einen in dem Analogkreis angeordneten ersten Verstärker zum Aufbereiten des Sensorsignals in dem ersten Kanal für den ersten Analog-Digital-Wandler und einen in dem Analogkreis angeordneten zweiten Verstärker zum Aufbereiten des Sensorsignals in dem zweiten Kanal für den zweiten Analog-Digital-Wandler auf, wobei das von einem der beiden Kanäle erhaltene Signal ein von dem Verstärker in diesem Kanal erhaltenes Signal ist. Auf diese Weise lässt sich die erfindungsgemäße Diagnose eines Kanals mittels Vergleichen eines von diesem Kanal erhaltenen Signals mit einem zugehörigen Erwartungswert mithilfe beider Mikrocontroller auf einfache Art und Weise mit einem von dem jeweiligen Verstärker in diesem Kanal erhaltenen Signal realisieren. Dabei kann bevorzugt durch Erkennung von Signalübersteuerungen oder von harmonischen Signalen ein Fehler in dem jeweiligen Kanal erkannt werden.

Eine Ausführungsform der Erfindung zeichnet sich dadurch aus, dass der erste Verstärker von dem ersten Mikrocontroller über eine erste Ansteuerleitung ansteuerbar ist, der zweite Verstärker von dem zweiten Mikrocontroller über eine zweite Ansteuerleitung ansteuerbar ist, ein Zustand der ersten Ansteuerleitung über eine erste Verstärkerrückleseleitung zu dem zweiten Mikrocontroller von diesem durch Vergleichen mit einem ersten Ansteuerleitungserwartungszustand überwachbar ist, ein Zustand der zweiten Ansteuerleitung über eine zweite Verstärkerrückleseleitung zu dem ersten Mikrocontroller von diesem durch Vergleichen mit einem zweiten Ansteuerleitungserwartungszustand überwachbar ist, und wobei, bevorzugt nach einer vordefinierten Rücklesefehlertoleranzzeit von bspw. etwa 3 s, ein Auslösen eines Fehl-Stop der Auswerteschaltung erfolgt, wenn der Zustand der ersten Ansteuerleitung, bevorzugt nach Berücksichtigung einer Toleranzabweichung, von dem ersten Ansteuerleitungserwartungszustand, und/oder der Zustand der zweiten Ansteuerleitung, bevorzugt nach Berücksichtigung einer Toleranzabweichung, von dem zweiten Ansteuerleitungserwartungszustand abweicht. Ein Vorteil dieser Ausführungsform liegt insbesondere darin, dass die jeweilige, für einen Verstärker in einem der Kanäle vorgesehene Ansteuerleitung über eine zugeordnete Verstärkerrückleseleitung mithilfe des Mikrocontrollers des anderen Kanals überwachbar ist. Auf diese Weise wird vorteilhaft ausgeschlossen, dass der jeweilige Verstärker fehlerhaft angesteuert wird und auf diese Weise ein Fehler verursacht wird.

Eine weitere Ausführungsform der Erfindung zeichnet sich dadurch aus, dass die Diagnose- und Vergleichseinheit eingerichtet ist, dass das Vergleichen eines von einem der beiden Kanäle erhaltenen Signals mit einem zugehörigen Erwartungswert abwechselnd mit einem von dem ersten Kanal erhaltenen Signal und mit einem von dem zweiten Kanal erhaltenen Signal vornehmbar ist.

Der Begriff "Abwechselnd" bedeutet in diesem Zusammenhang, dass die beiden Kanäle nacheinander der erfindungsgemäßen Diagnose bzw. Überprüfung durch Vergleichen eines von einem der beiden Kanäle erhaltenen Signals mit einem zugehörigen Erwartungswert mithilfe beider Mikrocontroller unterzogen werden. Diese Ausführungsform bietet den Vorteil, dass während der erfindungsgemäßen Diagnose eines Kanals durch das Vergleichen des von diesem Kanal erhaltenen Signals mit einem zugehörigen Erwartungswert durch die beiden Mikrocontroller der andere der beiden Kanäle das redundant vorhandene Sensorsignal weiter mit dem jeweiligen Mikrocontroller dieses Kanals, bevorzugt auch mit beiden Mikrocontrollern, auswerten kann, so dass insgesamt eine unterbrechungsfreie Messung durch den erfindungsgemäßen Flammenwächter sichergestellt ist. Mit anderen Worten: Es ist erfindungsgemäß auch während der erfindungsgemäßen Diagnose eine unterbrechungsfreie Messung möglich, in dem nur einer der beiden Mikrocontroller die Flammenentscheidung, also das Vorhandensein oder Nicht-Vorhandensein einer Flamme in dem überwachten Teilbereich der Brennkammer oder irgendwo in der Brennkammer, berechnet und dann nur das Ergebnis dem anderen Mikrocontroller mitteilt, Es ist jedoch erfindungsgemäß eine unterbrechungsfreie Messung während der Diagnose auch dadurch möglich, dass das Digitalsignal des AD-Wandlers jeweils an beide Mikrocontroller der Diagnose- und Vergleichseinheit geführt wird, wobei während der Diagnose dabei das Signal des gerade nicht getesteten Signals von beiden Mikrocontrollern für die Flammenentscheidung genutzt wird. Bei letzterer Variante berechnen somit vorteilhaft beide Mikrocontroller auch während der Diagnose weiterhin unabhängig voneinander die Flammenentscheidung.

Eine bevorzugte Ausführungsform der Erfindung zeichnet sich dadurch aus, dass die Diagnose- und Vergleichseinheit eingerichtet ist zum Halten des Fehl-Weiterbetriebsmodus für einen vordefinierten Zeitraum. Dieser Zeitraum richtet sich vorteilhaft nach der Wahrscheinlichkeit eines zweiten Fehlers. Mit anderen Worten sollte innerhalb des vordefinierten Zeitraums die Wahrscheinlichkeit für einen zweiten Fehler möglichst gering sein.

Bei einer bevorzugten Ausführungsform der Erfindung umfasst der Fehl-Weiterbetriebsmodus, dass die Auswerteschaltung bzw. der Flammenwächter nur noch mit dem anderen der beiden Kanäle arbeitet, das heißt nur noch einkanalig arbeitet. Bevorzugt wird bei dieser Ausführungsform der als fehlerhaft erkannte Kanal weiter erfindungsgemäß geprüft bzw. diagnostiziert. Es findet insoweit ein einkanaliger Diagnosebetrieb des Flammenwächters statt. In diesem Betriebsmodus wird somit nicht einfach nur mit dem nicht überprüften Kanal im Rahmen des Fehl-Weiterbetriebsmodus weitergearbeitet, sondern die vorgenommene Überprüfung wird, bevorzugt innerhalb einer vorbestimmten Diagnosezeit, weitergeführt bzw. wiederholt. Dabei wird erst nach einer bestimmten Anzahl von Wiederholungen der Überprüfung bzw. nach Ablauf einer individuell vordefinierten Diagnosezeit eine Entscheidung getroffen, ob endgültig, das heißt ohne weiteres Testen des als fehlerhaft erkannten Kanals, in dem Fehl-Weiterbetriebsmodus gearbeitet wird oder ob wieder in einem normalen zweikanaligen Betrieb der Auswerteschaltung zurückgewechselt wird, wenn sich bspw. bei dem wiederholten Testen des ursprünglich als fehlerhaft erkannten Kanals erwiesen hat, dass dieser ursprünglich als fehlerhaft erkannte Kanal doch nicht fehlerhaft ist. Diese Ausführungsform bietet somit eine erhöhte Flexibilität bei dem Auftreten einer Abweichung des von einem der beiden Kanäle erhaltenen Signals mit dem zugehörigen Erwartungswert mittels der beiden Mikrocontroller und insbesondere dem Festlegen einer Zeitdauer, einem Fortsetzen oder einer Beendigung eines daraufhin initiierten Fehl-Weiterbetriebsmodus.

Eine bevorzugte Ausführungsform der Erfindung zeichnet sich dadurch aus, dass die Auswerteschaltung nur dann nur noch einkanalig mit dem anderen der beiden Kanäle arbeitet, wenn die Diagnose- und Vergleichseinheit diesen anderen der beiden Kanäle als fehlerfrei eingestuft hat. Auf diese Weise wird sichergestellt, dass im Rahmen des Fehl-Weiterbetriebsmodus nicht in einen fehlerhaften Kanal gewechselt wird bzw. mit einem fehlerhaften Kanal weitergearbeitet wird.

Eine bevorzugte Ausführungsform der Erfindung zeichnet sich dadurch aus, dass die Diagnose- und Vergleichseinheit eingerichtet ist zum mehrfachen Vergleichen eines von einem der beiden Kanäle erhaltenen Signals mit einem zugehörigen Erwartungswert, sowohl mithilfe des ersten Mikrocontrollers als auch mithilfe des zweiten Mikrocontrollers, bevorzugt innerhalb einer vorbestimmten Fehlertoleranzzeit von bspw. etwa 1 s bis etwa 10 s, bevor ein Ergebnis der Vergleiche festgelegt wird. Durch das mehrfache Vergleichen mittels dieser Ausführungsform wird die Sicherheit des Ergebnisses der Vergleiche erhöht.

Eine bevorzugte Ausführungsform der Erfindung zeichnet sich dadurch aus, dass die Diagnose- und Vergleichseinheit eingerichtet ist, dann, wenn in einem der beiden Kanäle festgestellt wird, dass das vom Flammensensor erzeugte Sensorsignal nicht einer Flamme entspricht, das Vergleichen mit einem zugehörigen Erwartungswert, bevorzugt ausschließlich, mit einem von diesem Kanal erhaltenen Signal durchzuführen. Bei dieser Ausführungsform wird vorteilhaft das erfindungsgemäße Vergleichen eines von einem der beiden Kanäle erhaltenen Signals mit einem zugehörigen Erwartungswert mittels der beiden Mikrocontroller dadurch getriggert, dass das vom Flammensensor erzeugte Sensorsignal nicht einer Flamme entspricht, das heißt wenn mithilfe eines durchgeführten Abgleichs der Auswerteergebnisse der beiden Kanäle zwischen den beiden Mikrocontrollern bei einem der beiden Kanäle festgestellt wird, dass das von dem jeweiligen Mikrocontroller erstellte Auswerteergebnis aussagt, dass das dortige Sensorsignal des Flammensensors nicht einer Flamme entspricht. Diese Ausführungsform bietet somit den Vorteil, dass der Kanal erfindungsgemäß diagnostiziert wird, der anzeigt, dass keine Flamme mehr vorhanden ist und somit ursächlich wäre, dass ein das nicht-Vorhandensein einer Flamme anzeigendes Ausgabesignal ausgegeben würde. Somit kann bei einer vordefinierten Fehlertoleranzzeit diese voll ausgeschöpft werden, das heißt es können innerhalb einer vorgegebenen Fehlertoleranzzeit sicherheitserhöhend die maximal mögliche Anzahl von Wiederholungen des erfindungsgemäßen Vergleichens eines von einem der beiden Kanäle erhaltenen Signals mit einem zugehörigen Erwartungswert mithilfe der beiden Mikrocontroller durchgeführt werden, ohne dass es durch diese Diagnosezeit zu einer Flammenabmeldung kommt, da das Sensorsignal des Kanals, der "Flamme Ein" meldet, während der Diagnose als Basis für die Flammenentscheidung von beiden Mikrocontrollern genutzt wird.

Bei der bevorzugten Ausführungsform der Erfindung ist für jeden der beiden Kanäle, zumindest für deren analoge Teile, eine separate Spannungsversorgung vorgesehen. Auf diese Weise wird vorteilhaft eine Unabhängigkeit zwischen den Kanälen sichergestellt.

Die Erfindung beansprucht unabhängig Schutz für eine Brennkammer mit einem Flammenwächter gemäß einer der vorstehenden Ausführungsformen.

Obschon die Wirkungen und Vorteile der vorstehend beschriebenen Ausführungsformen der Erfindung im Zusammenhang mit dem erfindungsgemäßen Flammenwächter zur Überwachung mindestens eines Teilbereichs einer Brennkammer auf das Vorhandensein einer Flamme beschrieben wurden, soll an dieser Stelle jedoch verstanden werden, dass die vorstehend beschriebenen Wirkungen und Vorteile gleichermaßen auch für die im Folgenden beschriebenen Ausführungsformen des erfindungsgemäßen Verfahrens zur Überwachung mindestens eines Teilbereichs einer Brennkammer auf das Vorhandensein einer Flamme gelten, wobei diese Wirkungen und Vorteile zur Vermeidung von Wiederholungen nicht nochmals im Einzelnen dargestellt werden. Bevorzugte Ausführungsformen des erfindungsgemäßen Verfahrens umfassen insbesondere die Folgenden:
Eine bevorzugte Ausführungsform des erfindungsgemäßen Verfahrens zeichnet sich dadurch aus, dass das Initiieren des Fehl-Weiterbetriebsmodus nur erfolgt, wenn sowohl mithilfe des ersten Mikrocontrollers als auch mithilfe des zweiten Mikrocontrollers das Ergebnis des Vergleichens ist, dass das mit dem Erwartungswert verglichene Signal, bevorzugt nach Berücksichtigung einer Toleranzabweichung, von dem Erwartungswert abweicht.

Eine Ausführungsform des erfindungsgemäßen Verfahrens zeichnet sich dadurch aus, dass kein Initiieren des Fehl-Weiterbetriebsmodus erfolgt, sondern, bevorzugt nach einer vordefinierten Fehlertoleranzzeit von bspw. etwa 3 s, ein Auslösen eines Fehl-Stop (fail stop) erfolgt, wenn entweder nur mithilfe des ersten Mikrocontrollers oder nur mithilfe des zweiten Mikrocontrollers das Ergebnis des Vergleichens ist, dass das mit dem Erwartungswert verglichene Signal, bevorzugt nach Berücksichtigung einer Toleranzabweichung, von dem Erwartungswert abweicht.

Eine Ausführungsform des erfindungsgemäßen Verfahrens zeichnet sich dadurch aus, dass das von einem der beiden Kanäle erhaltene Signal ein von dem Analog-Digital-Wandler in diesem Kanal erhaltenes Signal ist.

Eine Ausführungsform des erfindungsgemäßen Verfahrens weist einen in dem Analogkreis vor dem ersten Analog-Digital-Wandler in dem ersten Kanal angeordneten und von der Diagnose- und Vergleichseinheit schaltbaren ersten Analogumschalter, und einen in dem Analogkreis vor dem zweiten Analog-Digital-Wandler in dem zweiten Kanal angeordneten und von der Diagnose- und Vergleichseinheit schaltbaren zweiten Analogumschalter auf, wobei mittels Umschalten des ersten und/oder des zweiten Analogumschalters dem jeweiligen Analog-Digital-Wandler, bevorzugt begrenzt auf einen vordefinierten Testzeitraum, statt des Sensorsignals ein, bevorzugt eine vordefinierte Amplitude und/oder eine vordefinierte Frequenz aufweisendes, Testsignal zum Testen dieses Analog-Digital-Wandlers zugeführt wird.

Eine Ausführungsform des erfindungsgemäßen Verfahrens zeichnet sich dadurch aus, dass der erste Analogumschalter von dem ersten Mikrocontroller über eine erste Steuerleitung umschaltbar ist, der zweite Analogumschalter von dem zweiten Mikrocontroller über eine zweite Steuerleitung umschaltbar ist, ein Zustand der ersten Steuerleitung über eine erste Rückleseleitung zu dem zweiten Mikrocontroller von diesem durch Vergleichen mit einem ersten Steuerleitungserwartungszustand überwachbar ist, ein Zustand der zweiten Steuerleitung über eine zweite Rückleseleitung zu dem ersten Mikrocontroller von diesem durch Vergleichen mit einem zweiten Steuerleitungserwartungszustand überwachbar ist, und mit dem Schritt: Auslösen, bevorzugt nach einer vordefinierten Rücklesefehlertoleranzzeit, eines Fehl-Stop der Auswerteschaltung, wenn der Zustand der ersten Steuerleitung, bevorzugt nach Berücksichtigung einer Toleranzabweichung, von dem ersten Steuerleitungserwartungszustand, und/oder der Zustand der zweiten Steuerleitung, bevorzugt nach Berücksichtigung einer Toleranzabweichung, von dem zweiten Steuerleitungserwartungszustand abweicht.

Eine Ausführungsform des erfindungsgemäßen Verfahrens zeichnet sich durch, ein Wegschalten des Testsignals in dem ersten Kanal nach Ablauf eines vordefinierten Testzeitraums mittels eines in dem ersten Kanal angeordneten und von der Diagnose- und Vergleichseinheit steuerbaren ersten Zusatzanalogumschalters, und/oder ein Wegschalten des Testsignals in dem zweiten Kanal nach Ablauf eines vordefinierten Testzeitraums mittels eines in dem zweiten Kanal angeordneten und von der Diagnose- und Vergleichseinheit steuerbaren zweiten Zusatzanalogumschalters aus.

Eine Ausführungsform des erfindungsgemäßen Verfahrens zeichnet sich durch, ein Überprüfen, vor einem Zuschalten des Sensorsignals nach einem Wegschalten des Testsignals in einem ausgewählten Kanal, mittels beider Mikrocontroller in dem ausgewählten Kanal, ob das Testsignal weggeschaltet ist und ob in dem ausgewählten Kanal der jeweilige Zusatzanalogumschalter zum Wegschalten des Testsignals funktioniert aus.

Eine Ausführungsform des erfindungsgemäßen Verfahrens zeichnet sich dadurch aus, dass das von einem der beiden Kanäle erhaltene Signal ein von dem Relais in diesem Kanal erhaltenes Signal ist.

Eine Ausführungsform des erfindungsgemäßen Verfahrens zeichnet sich dadurch aus, dass das von dem Relais erhaltene Signal ein von einem Rücklesekontakt des Relais erhaltenes Signal ist.

Eine Ausführungsform des erfindungsgemäßen Verfahrens zeichnet sich dadurch aus, dass das erste Relais von dem ersten Mikrocontroller über eine erste Relaissteuerleitung steuerbar ist, das, bevorzugt in Reihe zum ersten Relais geschaltete, zweite Relais von dem zweiten Mikrocontroller über eine zweite Relaissteuerleitung steuerbar ist, ein Zustand der ersten Relaissteuerleitung über eine erste Relaisrückleseleitung zu dem zweiten Mikrocontroller von diesem durch Vergleichen mit einem ersten Relaissteuerleitungserwartungszustand überwachbar ist, mit den Schritten: Überwachen eines Zustands der zweiten Relaissteuerleitung über eine zweite Relaisrückleseleitung zu dem ersten Mikrocontroller von diesem durch Vergleichen mit einem zweiten Relaissteuerleitungserwartungszustand, und Auslösen, bevorzugt nach einer vordefinierten Rücklesefehlertoleranzzeit, eines Fehl-Stop der Auswerteschaltung, wenn der Zustand der ersten Relaissteuerleitung, bevorzugt nach Berücksichtigung einer Toleranzabweichung, von dem ersten Relaissteuerleitungserwartungszustand, und/oder der Zustand der zweiten Relaissteuerleitung, bevorzugt nach Berücksichtigung einer Toleranzabweichung, von dem zweiten Relaissteuerleitungserwartungszustand abweicht.

Eine Ausführungsform des erfindungsgemäßen Verfahrens weist, einen in dem Analogkreis angeordneten ersten Verstärker zum Aufbereiten des Sensorsignals in dem ersten Kanal für den ersten Analog-Digital-Wandler und einen in dem Analogkreis angeordneten zweiten Verstärker zum Aufbereiten des Sensorsignals in dem zweiten Kanal für den zweiten Analog-Digital-Wandler auf, wobei das von einem der beiden Kanäle erhaltene Signal ein von dem Verstärker in diesem Kanal erhaltenes Signal ist.

Eine Ausführungsform des erfindungsgemäßen Verfahrens zeichnet sich dadurch aus, dass der erste Verstärker von dem ersten Mikrocontroller über eine erste Ansteuerleitung ansteuerbar ist, der zweite Verstärker von dem zweiten Mikrocontroller über eine zweite Ansteuerleitung ansteuerbar ist, mit den Schritten: Überwachen eines Zustands der ersten Ansteuerleitung über eine erste Verstärkerrückleseleitung zu dem zweiten Mikrocontroller von diesem durch Vergleichen mit einem ersten Ansteuerleitungserwartungszustand, Überwachen eines Zustands der zweiten Ansteuerleitung über eine zweite Verstärkerrückleseleitung zu dem ersten Mikrocontroller von diesem durch Vergleichen mit einem zweiten Ansteuerleitungserwartungszustand überwachbar ist, und Auslösen, bevorzugt nach einer vordefinierten Rücklesefehlertoleranzzeit, eines Fehl-Stop der Auswerteschaltung, wenn der Zustand der ersten Ansteuerleitung, bevorzugt nach Berücksichtigung einer Toleranzabweichung, von dem ersten Ansteuerleitungserwartungszustand, und/oder der Zustand der zweiten Ansteuerleitung, bevorzugt nach Berücksichtigung einer Toleranzabweichung, von dem zweiten Ansteuerleitungserwartungszustand abweicht.

Eine Ausführungsform des erfindungsgemäßen Verfahrens zeichnet sich dadurch aus, dass das Vergleichen eines von einem der beiden Kanäle erhaltenen Signals mit einem zugehörigen Erwartungswert abwechselnd mit einem von dem ersten Kanal erhaltenen Signal und mit einem von dem zweiten Kanal erhaltenen Signal vorgenommen wird.

Eine Ausführungsform des erfindungsgemäßen Verfahrens zeichnet sich durch ein Halten des Fehl-Weiterbetriebsmodus für einen vordefinierten Zeitraum aus.

Eine Ausführungsform des erfindungsgemäßen Verfahrens zeichnet sich dadurch aus, dass der Fehl-Weiterbetriebsmodus umfasst, dass die Auswerteschaltung nur noch einkanalig mit dem anderen der beiden Kanäle arbeitet.

Eine Ausführungsform des erfindungsgemäßen Verfahrens zeichnet sich dadurch aus, dass die Auswerteschaltung nur dann nur noch einkanalig mit dem anderen der beiden Kanäle arbeitet, wenn die Diagnose- und Vergleichseinheit diesen anderen der beiden Kanäle als fehlerfrei eingestuft hat.

Eine Ausführungsform des erfindungsgemäßen Verfahrens zeichnet sich durch mehrfaches Vergleichen eines von einem der beiden Kanäle erhaltenen Signals mit einem zugehörigen Erwartungswert aus, sowohl mithilfe des ersten Mikrocontrollers als auch mithilfe des zweiten Mikrocontrollers, bevor, bevorzugt erst nach Ablauf einer vorbestimmten Fehlertoleranzzeit, ein Ergebnis der Vergleiche festgelegt wird.

Eine Ausführungsform des erfindungsgemäßen Verfahrens zeichnet sich dadurch aus, dass das Durchführen des Vergleichens mit einem zugehörigen Erwartungswert, bevorzugt ausschließlich, mit einem von einem Kanal erhaltenen Signal erfolgt, in welchem Kanal festgestellt wurde, dass das vom Flammensensor erzeugte Sensorsignal nicht einer Flamme entspricht.

Weitere Ausführungsformen der Erfindung sind in den Unteransprüchen angegeben.

Ausführungsformen der Erfindung werden nun anhand der Zeichnung beschrieben. Gleiche bzw. funktionsgleiche Teile sind mit denselben Bezugszeichen bezeichnet. Die Figuren zeigen:
- Figur 1: einen schematischen Aufbau einer Ausführungsform einer Brennkammer mit einem Flammenwächter;
- Figur 2: einen schematischen Aufbau einer ersten Ausführungsform eines Flammenwächters;
- Figur 3: einen schematischen Aufbau einer zweiten Ausführungsform eines Flammenwächters;
- Figur 4: einen schematischen Aufbau einer dritten Ausführungsform eines Flammenwächters; und
- Figur 5: einen schematischen Aufbau einer vierten Ausführungsform eines Flammenwächters.

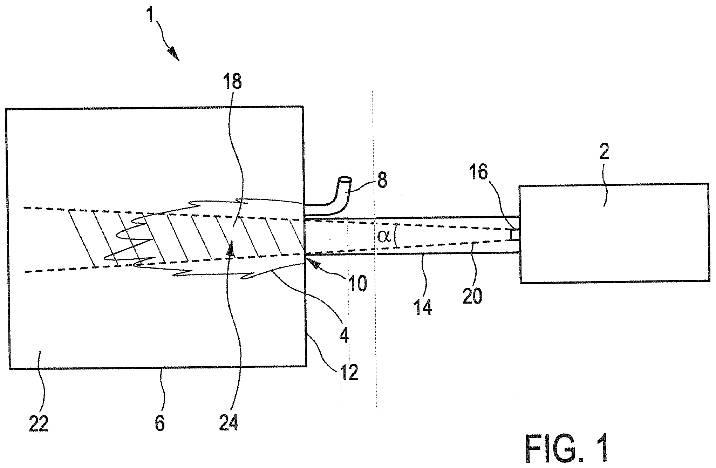

Figur 1 zeigt einen schematischen Aufbau einer Ausführungsform einer Brennkammer 1 mit einem Flammenwächter 2 zur Überwachung des Vorhandenseins einer Flamme 4 in der Brennkammer 1. Die Flamme 4 befindet sich in einem Gehäuse 6 der Brennkammer 1 an einem nicht dargestellten Brenner, der zum Speisen der Flamme 4 über eine mit einem nicht dargestellten Brennstoffvorrat verbundene Brennstoffzufuhr 8 mit Brennstoff versorgt wird und auch Luft zuführt.

Auf einer Öffnung 10 in der rechts dargestellten, dem Flammenwächter 2 zugewandten Seitenwand 12 der Brennkammer 1 befindet sich ein Sichtrohr 14, welches mit dem Flammenwächter 2 verbunden ist. Das Sichtrohr 14 ist optional, so dass der Flammenwächter 2 auch direkt mit dem Gehäuse 6 verbunden sein kann.

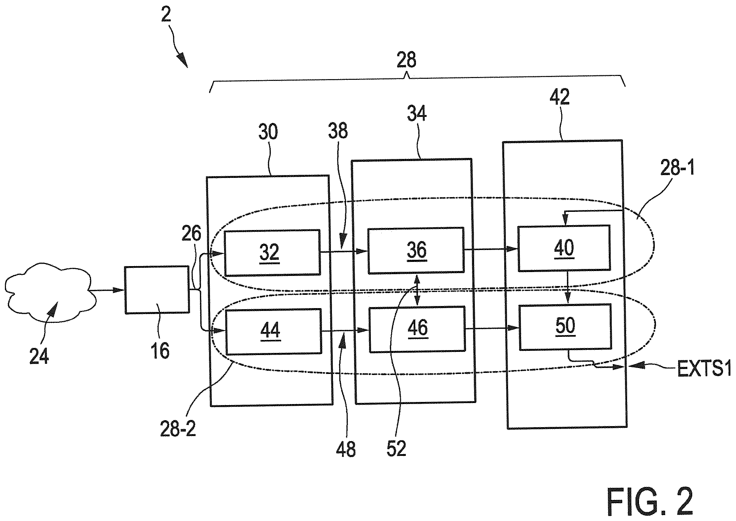

In der dargestellten Ausführungsform der Figur 1 trägt der Flammenwächter 2 auf einem in das Sichtrohr weisenden Abschnitt einen Flammensensor 16 zum Erfassen einer physikalischen Größe der Flamme 4, insbesondere zum Erfassen von elektromagnetischer Strahlung, in einem für die Flamme 4 vorgesehenen Teilbereich 18, in der Figur 1 schraffiert dargestellt. Hierzu kann der Flammensensor 16 mit einem Sichtkegel oder Sichtfeld 20 mit einem Öffnungswinkel α von bspw. 6° durch die Öffnung 10 in einen von dem Gehäuse 6 umgebenen Innenraum 22 der Brennkammer 1 blicken. Weiterhin ist der Flammensensor 16 eingerichtet, insbesondere in seiner Empfindlichkeit so ausgerüstet, ein zugehöriges elektrisches Sensorsignal 26 (siehe Figur 2) entsprechend einer in dem für die Flamme 4 vorgesehenen Teilbereich 18 herrschenden elektromagnetischen Strahlung 24 zu erzeugen. In dem dargestellten Ausführungsbeispiel der Figur 1 ist der Flammensensor 16 bspw. mit einer spektralen Empfindlichkeit zum Erfassen elektromagnetischer Strahlung in Wellenlängenbereichen von etwa 280 bis etwa 410 Nanometer, und/oder etwa 190 bis etwa 520 Nanometer und/oder etwa 780 bis etwa 1800 Nanometer ausgestattet.

Figur 2 zeigt einen schematischen Aufbau einer ersten Ausführungsform eines Flammenwächters, bspw. eines Flammenwächters 2 gemäß Figur 1. Gemäß dieser Ausführungsform weist der dargestellte Flammenwächter 2 zur Überwachung des Vorhandenseins einer Flamme 4 in einer Brennkammer, bspw. in einer Brennkammer 1 gemäß Figur 1, einen Flammensensor 16 zum Erfassen einer physikalischen Größe einer Flamme bspw. in einem Teilbereich 18 gemäß Figur 1, und zum Erzeugen eines zugehörigen elektrischen Sensorsignals 26 auf.

Der in Figur 2 dargestellte Flammenwächter 2 weist weiterhin eine dem Flammensensor 16 nachgeschaltete, zweikanalige Auswerteschaltung 28 auf, zum Feststellen, ob das vom Flammensensor 16 erzeugte Sensorsignal 26 einer Flamme 4 entspricht, und zum Ausgeben eines das Vorhandensein oder das nicht-Vorhandensein einer Flamme 4 anzeigenden Ausgabesignals EXTS1.

Die zweikanalige Auswerteschaltung 28 weist einen zum Verarbeiten des Sensorsignals 26 eingerichteten ersten Kanal 28-1 und einen zum Verarbeiten des Sensorsignals 26 eingerichteten zweiten Kanal 28-2 auf. Der erste Kanal 28-1 umfasst in einem Analogkreis 30 einen ersten, einen ersten analogen Verstärker aufweisenden Analog-Digital-Wandler 32, im Folgenden erster AD-Wandler 32 genannt. Der erste Kanal 28-1 umfasst weiterhin einen einer digitalen Diagnose- und Vergleichseinheit 34 zugehörigen ersten Mikrocontroller 36 zum Auswerten eines von dem ersten AD-Wandler 32 erhaltenen ersten Signals 38. Weiterhin umfasst der erste Kanal 28-1 ein von dem ersten Mikrocontroller 36 gesteuertes erstes Relais 40 in einem Relaiskreis 42.

Der zum ersten Kanal 28-1 bevorzugte redundante zweite Kanal 28-2 weist in dem Analogkreis 30 einen zweiten, einen zweiten analogen Verstärker aufweisenden AD-Wandler 44, einen der digitalen Diagnose- und Vergleichseinheit 34 zugehörigen zweiten Mikrocontroller46 zum Auswerten eines von dem zweiten AD-Wandler 44 erhaltenen zweiten Signal 48, und ein von dem zweiten Mikrocontroller 46 gesteuertes zweites Relais 50 in dem Relaiskreis 42 auf. Bevorzugt werden für die Relais 40 und 50 zwangsgeführte Relais verwendet, die bevorzugt in Reihe geschaltet sind, so dass beim Ausfall bzw. einem nicht korrekten Schalten eines der Relais 40, 50 ein weiteres Relais 40, 50 zur Verfügung steht.

Bevorzugt ist nur ein Fotosensor 16 vorgesehen. Der Fotosensor 16 ist bevorzugt als Fotodiode ausgebildet. Dabei wird bevorzugt die Anode der Fotodiode an den ersten Kanal 28-1 und die Katode an den zweiten Kanal 28-2 geführt.

Bevorzugt wird ein Pin des Fotosensors 16 bzw. der Fotodiode bei einem Fehler in einem der Kanäle 28-1 bzw. 28-2 von dem fehlerhaften Kanal 28-1 bzw. 28-2 mittels eines nicht dargestellten Analogumschalters auf ein festes Potential gelegt, um Rückwirkungen über den Fotosensor 16 von dem defekten Kanal 28-1 bzw. 28-2 auf den jeweils anderen Kanal 28-1 bzw. 28-2 zu verhindern.

Die Diagnose- und Vergleichseinheit 34 ist eingerichtet zum Durchführen eines durch den Doppelpfeil 52 symbolisierten Abgleichs eines ersten Auswerteergebnisses des ersten Mikrocontrollers 36 und eines zweiten Auswerteergebnisses des zweiten Mikrocontrollers 46 und zum Beeinflussen des Ausgabesignals EXTS1 in Abhängigkeit von einem Ergebnis des Abgleichs 52.

Die Diagnose- und Vergleichseinheit 34 der in Figur 2 dargestellten Ausführungsform ist weiterhin eingerichtet zum Vergleichen eines von einem der beiden Kanäle 28-1 und 28-2 erhaltenen Signals mit einem zugehörigen Erwartungswert, sowohl mithilfe des ersten Mikrocontrollers 36 als auch mithilfe des zweiten Mikrocontrollers 46, und zum optionalen Initiieren eines Fehl-Weiterbetriebsmodus durch die Auswerteschaltung 28 in Abhängigkeit von einem Ergebnis des Vergleichens.

Hierfür ist die Diagnose- und Vergleichseinheit 34 bevorzugt so eingerichtet, dass das Initiieren des Fehl-Weiterbetriebsmodus nur erfolgt, wenn sowohl mithilfe des ersten Mikrocontrollers 36 als auch mithilfe des zweiten Mikrocontrollers 46 das Ergebnis des Vergleichens ist, dass das mit dem Erwartungswert verglichene Signal, bevorzugt nach Berücksichtigung einer vorab definierten Toleranzabweichung, von dem Erwartungswert abweicht.

Die Diagnose- und Vergleichseinheit 34 ist bevorzugt so eingerichtet, dass kein Initiieren des Fehl-Weiterbetriebsmodus erfolgt, sondern, bevorzugt nach einer vordefinierten Fehlertoleranzzeit von bevorzugt etwa 3 s, ein Auslösen eines Fehl-Stop durch die Auswerteschaltung 28 erfolgt, wenn entweder nur mithilfe des ersten Mikrocontrollers 36 oder nur mithilfe des zweiten Mikrocontrollers 46 das Ergebnis des Vergleichens ist, dass das mit dem Erwartungswert verglichene Signal, bevorzugt nach Berücksichtigung einer Toleranzabweichung, von dem Erwartungswert abweicht.

Bevorzugt ist das von einem der beiden Kanäle 28-1, 28-2 erhaltene Signal ein von dem jeweiligen AD-Wandler 32 bzw. 44 in dem jeweiligen Kanal 28-1 bzw. 28-2 erhaltenes Signal. Alternativ kann das von einem der beiden Kanäle 28-1, 28-2 erhaltene Signal zusätzlich oder alternativ ein von dem jeweiligen Relais 40 bzw. 50 des jeweiligen Kanals 28-1 bzw. 28-2 erhaltene Signal sein.

Bevorzugt ist die Diagnose- und Vergleichseinheit 34 so eingerichtet, dass das Vergleichen eines von einem der beiden Kanäle 28-1, 28-2 erhaltene Signal mit einem zugehörigen Erwartungswert abwechselnd mit einem von dem ersten Kanal 28-1 erhaltenen Signal und mit einem von dem zweiten Kanal 28-2 erhaltenen Signal vornehmbar ist.

Bevorzugt ist die Diagnose- und Vergleichseinheit 34 so eingerichtet, dass sie einen Fehl-Weiterbetriebsmodus für einen vordefinierten Zeitraum halten kann.

Bevorzugt umfasst der Fehl-Weiterbetriebsmodus der Auswerteschaltung 28, dass die Auswerteschaltung 28 nur noch einkanalig mit dem anderen der beiden Kanäle 28-1 bzw. 28-2 arbeitet. Dabei ist es weiter bevorzugt, wenn die Auswerteschaltung 28 nur dann nur noch einkanalig mit dem anderen der beiden Kanäle 28-1 bzw. 28-2 arbeitet, wenn die Diagnose- bzw. Vergleichseinheit 34 diesen anderen der beiden Kanäle 28-1 bzw. 28-2 als fehlerfrei eingestuft hat.

Bevorzugt ist die Diagnose- und Vergleichseinheit 34 so eingerichtet, dass sie ein mehrfaches Vergleichen eines von einem der beiden Kanäle 28-1, 28-2 erhaltenen Signals mit einem zugehörigen Erwartungswert, sowohl mithilfe des ersten Mikrocontrollers 36 als auch mithilfe des zweiten Mikrocontrollers 46, bevorzugt innerhalb einer vorbestimmten Fehlertoleranzzeit, durchführt, bevor ein Ergebnis der Vergleiche von der Auswerteschaltung 28 festgelegt wird.

Weiterhin ist die Diagnose- und Vergleichseinheit 34 bevorzugt so eingerichtet, dass dann, wenn in einem der beiden Kanäle 28-1, 28-2 festgestellt wird, dass das von dem Flammensensor 16 erzeugte Sensorsignal 26 nicht einer Flamme 4 entspricht, das Vergleichen mit einem zugehörigen Erwartungswert, bevorzugt ausschließlich, mit einem von diesem Kanal 28-1, 28-2 erhaltenen Signal durchgeführt wird.

Bevorzugt ist für jeden der beiden Kanäle 28-1 und 28-2, zumindest für deren analoge Teile im Analogkreis 30 eine in Figur 2 nicht dargestellte separate Spannungsversorgung vorgesehen.

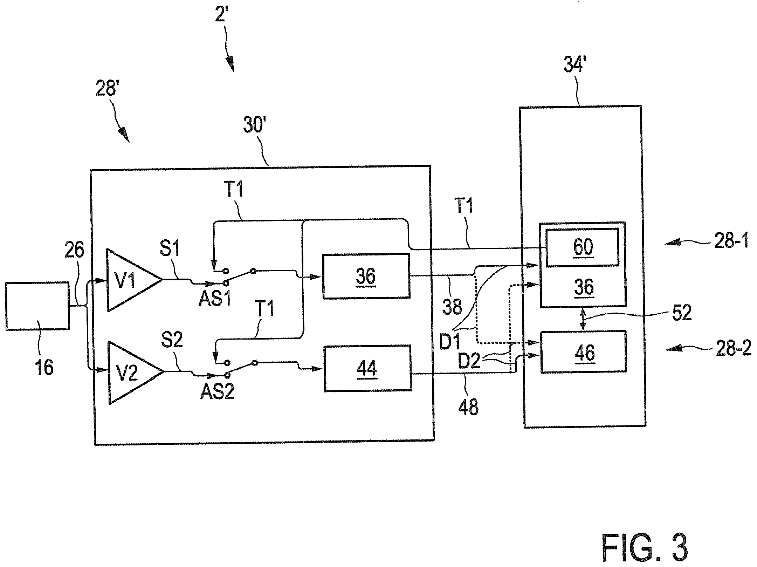

Figur 3 zeigt einen schematischen Aufbau einer zweiten Ausführungsform eines Flammenwächters 2`. Der Aufbau des Flammenwächters 2` der Ausführungsform gemäß Figur 3 entspricht in seinen Grundzügen dem Aufbau des Flammenwächters 2 gemäß Figur 2. Zusätzlich weist der Flammenwächter 2` der in Figur 3 dargestellten Ausführungsform in einem Analogkreis 30' einen vor dem ersten AD-Wandler 32 in dem ersten Kanal 28-1 angeordneten und von einer Diagnose- und Vergleichseinheit 34` schaltbaren ersten Analog-Umschalter AS1 auf. Weiterhin weist der Flammenwächter 2` einen in dem Analogkreis 30' vor dem zweiten AD-Wandler 44 in dem zweiten Kanal 28-2 angeordneten und von der Diagnose- und Vergleichseinheit 34` schaltbaren zweiten Analogumschalter AS2 auf.

Der Flammenwächter 2` der in Figur 3 dargestellten Ausführungsform weist weiterhin einen in dem Analogkreis 30' angeordneten ersten Verstärker V1 zum Aufbereiten des Sensorsignals 26 in den ersten Kanal 28-1 für den ersten AD-Wandler 32, und einen in dem Analogkreis 30' angeordneten zweiten Verstärker V2 zum Aufbereiten des Sensorsignals 26 in den zweiten Kanal 28-2 für den zweiten AD-Wandler 44 auf.

In der in Figur 3 dargestellten Schaltstellung des ersten Analogumschalters AS1 führt dieser das Sensorsignal 26 als ein von dem Verstärker V1 aufbereitetes erstes Signal S1 dem ersten AD-Wandler 32 zu. Ebenso führt der zweite Analogumschalter AS2 in dem in Figur 3 dargestellten Schaltzustand das Sensorsignal 26 als ein von dem Verstärker V2 aufbereitetes zweites Signal S2 dem zweiten AD-Wandler 44 zu.

Die Diagnose- und Vergleichseinheit 34` der in Figur 3 dargestellten Ausführungsform ist eingerichtet, mittels Umschalten des ersten Analogumschalters AS1 und/oder mittels des zweiten Analogumschalter AS2 dem jeweiligen AD-Wandler 32 bzw. 44, bevorzugt begrenzt auf einen vordefinierten Testzeitraum, statt des Sensorsignals 26 ein, bevorzugt eine vordefinierte Amplitude und/oder eine vordefinierte Frequenz aufweisendes, Testsignal T1 zum Testen dieses AD-Wandlers 32 bzw. 44 zuzuführen.

Das Testsignal T1 wird bevorzugt durch einen, und weiter bevorzugt nur einen, Testsignalgenerator 60 in dem ersten Mikrocontroller 36 erzeugt.

Die Diagnose- und Vergleichseinheit 34` der in Figur 3 dargestellten Ausführungsform ist insbesondere eingerichtet zum Vergleichen eines von dem Kanal 28-1 erhaltenen Signals D1 mit einem zugehörigen, bevorzugt in einem nicht dargestellten Speicher der Diagnose- und Vergleichseinheit 34` gespeicherten, Erwartungswert sowohl mithilfe des ersten Mikrocontrollers 36 als auch mithilfe des zweiten Mikrocontrollers 46, und zum optionalen Initiieren eines Fehl-Weiterbetriebsmodus durch die Auswerteschaltung 28' in Abhängigkeit von einem Ergebnis des Vergleichens nach einem entsprechenden Zuschalten des Testsignals T1 auf den Kanal 28-1 durch den Analogumschalter AS1.

Ebenso ist die Diagnose- und Vergleichseinheit 34` der in Figur 3 dargestellten Ausführungsform eingerichtet zum Vergleichen eines von dem zweiten Kanal 28-2 erhaltenen Signals D2 mit einem zugehörigen Erwartungswert sowohl mithilfe des ersten Mikrocontrollers 36 als auch mithilfe des zweiten Mikrocontrollers 46, und zum optionalen Initiieren eines Fehl-Weiterbetriebsmodus durch die Auswerteschaltung 28' in Abhängigkeit von einem Ergebnis des Vergleichens, sobald das Testsignal T1 mithilfe des von der Diagnose- und Vergleichseinheit 34` gesteuerten Analogumschalters AS2 auf den AD-Wandler 44 des zweiten Kanals 28-2 geschaltet ist. Ebenso wie bei der Ausführungsform der Figur 2 ist die Diagnose- und Vergleichseinheit 34` dabei so eingerichtet, dass das Initiieren des Fehl-Weiterbetriebsmodus nur dann erfolgt, wenn sowohl mithilfe des ersten Mikrocontrollers 36 als auch mithilfe des zweiten Mikrocontrollers 46 das Ergebnis des Vergleichens ist, dass das mit dem Erwartungswert verglichene Signal D1 bei einem Testen des ersten Kanals 28-1 mithilfe des Testsignals T1, bzw. das mit dem Erwartungswert verglichene Signal D2 bei einem Test des zweiten Kanals 28-2 mithilfe des Testsignals T1, auch nach Berücksichtigung einer vorab definierten Toleranzabweichung, von dem Erwartungswert abweicht.

Bevorzugt ist die Diagnose- und Vergleichseinheit 34` eingerichtet zum Vergleichen eines von einem der beiden Kanäle 28-1 erhaltenen Signals D1 oder D2 mit einem zugehörigen Erwartungswert, sowohl mithilfe des ersten Mikrocontrollers 36 als auch mithilfe des zweiten Mikrocontrollers 46, und zum optionalen Initiieren eines Fehl-Weiterbetriebsmodus der Auswerteschaltung 28` in Abhängigkeit von einem Ergebnis dieses Vergleichens, als Signal ein von dem jeweiligen Verstärker V1 bzw. V2 in diesem Kanal 28-1 bzw. 28-2 erhaltenes Signal zu verwenden.

Bei dieser Ausführungsform wird somit eine Diagnose eines der beiden Kanäle 28-1 bzw. 28-2 mithilfe des separaten Testsignals T1 vorgenommen. Mithilfe dieses Testsignals T1 wird der jeweilige AD-Wandler 32 bzw. 44 erfindungsgemäß getestet bzw. diagnostiziert. Es kann somit entweder festgestellt werden, dass der analoge Teil des Kanals 28-1 bzw. 28-2, das heisst der aus erstem Verstärker V1 und erstem AD-Wandler 32 bestehende analoge Teil des Kanals 28-1 bzw. der aus zweiten Verstärker V2 und zweiten AD-Wandler 44 bestehende analoge Teil des Kanals 28-2, fehlerfrei ist, wenn das von dem jeweiligen AD-Wandler 32 bzw. 44 erhaltene Signal D1 bzw. D2 dem zugehörigen Erwartungswert entspricht, oder es kann ein Fehl-Weiterbetriebsmodus durch die Auswerteschaltung 28' initiiert werden, wenn das erhaltene Signal D1 bzw. D2 sowohl mithilfe des ersten Mikrocontrollers 36 als auch mithilfe des zweiten Mikrocontrollers 46 dem zugehörigen Erwartungswert, auch nach Abzug einer entsprechenden Toleranzabweichung, nicht entspricht. Dabei kann der zugehörige Erwartungswert ein bestimmtes Testmuster sein. Bevorzugt wird der Erwartungswert bzw. das Testmuster über einen internen Datenaustausch zwischen den beiden Mikrocontrollern 36 bzw. 46 gemäß Pfeil 52 ausgetauscht, so dass beide Mikrocontroller 36 und 46 über den identischen Erwartungswert bzw. über das identische Testmuster verfügen.

Wie bei der Ausführungsform der Figur 2, umfasst auch der Fehl-Weiterbetriebsmodus der Auswerteschaltung 28' bei einer bevorzugten Variante, dass die Auswerteschaltung 28' nur noch einkanalig mit dem anderen der beiden Kanäle 28-1 bzw. 28-2 arbeitet. Dabei ist es weiter bevorzugt, wenn die Auswerteschaltung 28' nur dann nur noch einkanalig mit dem anderen der beiden Kanäle 28-1 bzw. 28-2 arbeitet, wenn die Diagnose- bzw. Vergleichseinheit 34' diesen anderen der beiden Kanäle 28-1 bzw. 28-2 als fehlerfrei eingestuft hat. Alternativ ist bevorzugt, dass nur der analoge Teil des jeweiligen Kanals 28-1 bzw. 28-2 einkanalig ist, während die Datenauswertung des eigentlichen Signals S1 bzw. S2 in der Diagnose- und Auswerteeinheit 34` weiterhin durch beide Mikrocontroller 36 sowie 46 erfolgt, in dem die Signale D1 bzw. D2 wie in Figur 3 dargestellt entsprechend an beide Mikrocontroller 36 und 46 geführt werden.

Bevorzugt kann zu diesem Zweck der erste Verstärker V1 von dem ersten Mikrocontroller 36 über eine erste, nicht dargestellte, Ansteuerleitung ansteuerbar sein, während der zweite Verstärker V2 von dem zweiten Mikrocontroller 46 über eine, nicht dargestellte, zweite Ansteuerleitung ansteuerbar ist, wobei ein Zustand der ersten Ansteuerleitung über eine erste, nicht dargestellte, Verstärkerrückleseleitung zu dem zweiten Mikrocontroller 46 von diesem durch Vergleichen mit einem ersten Ansteuerleitungserwartungszustand überwachbar ist, während ein Zustand der zweiten Ansteuerleitung über eine zweite, nicht dargestellte, Verstärkerrückleseleitung zu dem ersten Mikrocontroller von diesem durch Vergleichen mit einem zweiten Ansteuerleitungserwartungszustand überwachbar ist, und wobei, bevorzugt nach einer vordefinierten Rücklesefehlertoleranzzeit von bspw. etwa 3 s, ein Auslösen eines Fehl-Stop durch die Auswerteschaltung bzw. ein entsprechendes Ausgeben eines das nicht-Vorhandenseins einer Flamme anzeigenden Ausgabesignals erfolgt, wenn der Zustand der ersten Ansteuerleitung, bevorzugt nach Berücksichtigung einer Toleranzabweichung, von dem ersten Ansteuerleitungserwartungszustand, und/oder der Zustand der zweiten Ansteuerleitung, bevorzugt nach Berücksichtigung einer Toleranzabweichung, von dem zweiten Ansteuerleitungserwartungszustand abweicht.

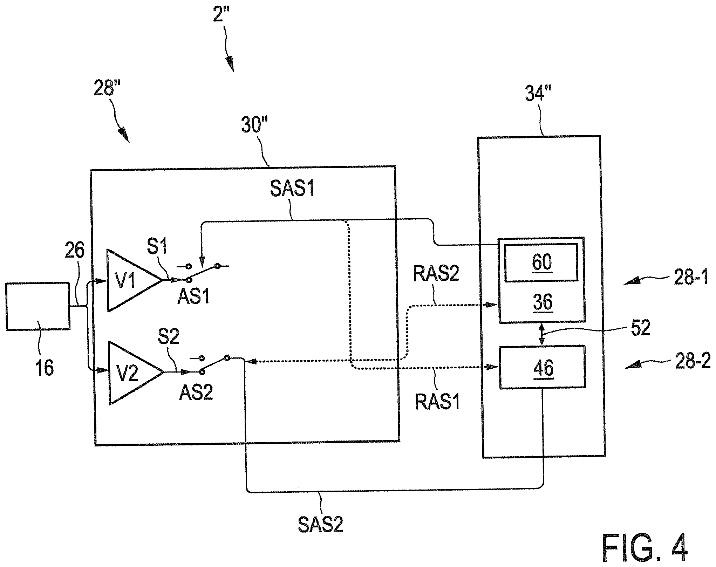

Figur 4 zeigt einen schematischen Aufbau einer dritten Ausführungsform eines Flammenwächters 2". Der grundlegende Aufbau des Flammenwächters 2" der Ausführungsform der Figur 4 entspricht im Wesentlichen dem Aufbau des Flammenwächters 2` der zweiten Ausführungsform gemäß Figur 3. In der Figur 4 ist aus Vereinfachungsgründen auf eine Darstellung der AD-Wandler 32 und 44 verzichtet worden.

Bei der dritten Ausführungsform des Flammenwächters 2" der Figur 4 ist der erste Analogumschalter AS1 von dem ersten Mikrocontroller 36 über eine erste Steuerleitung SAS1 umschaltbar. Der zweite Analogumschalter AS2 ist von dem zweiten Mikrocontroller 46 über eine zweite Steuerleitung SAS2 umschaltbar. Ein Zustand der ersten Steuerleitung SAS1 ist von dem zweiten Mikrocontroller 46 über eine erste Rückleseleitung RAS1 zu dem zweiten Mikrocontroller 46 von diesem durch Vergleichen mit einem ersten Steuerleitungserwartungszustand überwachbar. Ein Zustand der zweiten Steuerleitung SAS2 ist von dem ersten Mikrocontroller 36 über eine zweite Rückleseleitung RAS2 zu dem ersten Mikrocontroller 36 von diesem durch Vergleichen mit einem zweiten Steuerleitungserwartungszustand überwachbar.

Bei dem Flammenwächter 2" der dritten Ausführungsform gemäß Figur 4 erfolgt, bevorzugt nach einer vordefinierten Rücklesefehlertoleranzzeit von bspw. etwa 3 s, ein Auslösen eines Fehl-Stop durch die Auswertungsschaltung 28" bzw. das Erzeugen und Ausgeben eines das nicht-Vorhandensein eine Flamme anzeigenden Ausgabesignals EXTS1, wenn der Zustand der ersten Steuerleitung SAS1, bevorzugt nach Berücksichtigung einer Toleranzabweichung, von dem ersten Steuerleitungserwartungszustand und/oder Zustand der zweiten Steuerleitung, bevorzugt nach Berücksichtigung einer Toleranzabweichung, von dem zweiten Steuerleitungserwartungszustand abweicht.

Bevorzugt ist in dem ersten Kanal 28-1 ein von der Diagnose- und Vergleichseinheit 34" steuerbare, nicht dargestellter, erster Zusatzanalogumschalter zum Wegschalten des Testsignals T1 gemäß Figur 3, und dem zweiten Kanal 28-2 ein von der Diagnose- und Vergleichseinheit 34" steuerbarer, ebenfalls nicht dargestellter, zweiter Zusatzanalogumschalter zum Wegschalten des Testsignals T1 vorgesehen. Hierbei ist die Diagnose- und Vergleichseinheit 34" bevorzugt so eingerichtet, dass sie vor einem Zuschalten des Sensorsignals 26 nach einem Wegschalten des Testsignals T1 in einem ausgewählten Kanal 28-1 bzw. 28-2 mittels beider Mikrocontroller 36 und 46 in den jeweiligen ausgewählten Kanal 28-1 oder 28-2 überprüft, ob das Testsignal T1 weggeschaltet ist und ob in dem ausgewählten Kanal 28-1 oder 28-2 der jeweilige Zusatzanalogumschalter zum Wegschalten des Testsignals T1 funktioniert.

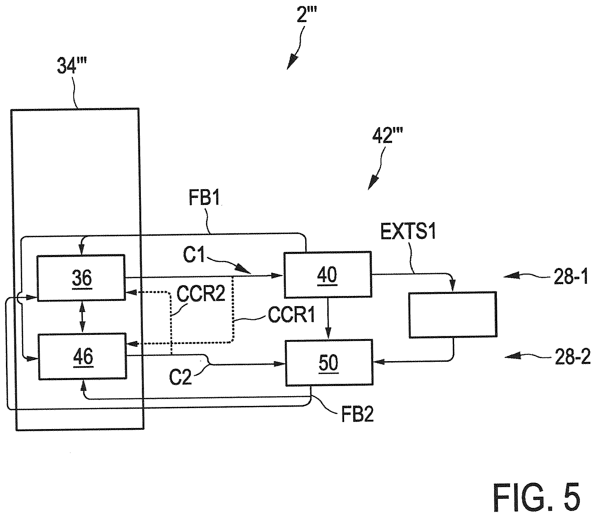

Figur 5 zeigt eine vierte Ausführungsform eines erfindungsgemäßen Flammenwächters 2‴. Der in der vierten Ausführungsform der Figur 5 dargestellte Flammenwächter 2‴ entspricht in seinem grundlegenden Aufbau im Wesentlichen dem Flammenwächter 2 der ersten Ausführungsform der Figur 2. Der Flammenwächter 2‴ kann jedoch auch einem der Flammenwächter 2' oder 2" entsprechen oder eine Kombination aller vorstehend beschriebenen Ausführungsformen sein. Darüber hinaus ist in der Darstellung der Figur 5 zur Vereinfachung nur die Diagnose- und Vergleichseinheit 34‴ und der Relaiskreis 42‴ dargestellt. In der in Figur 5 dargestellten Ausführungsform ist ein von dem jeweiligen Relais 40 bzw. 50 erhaltene Signal ein von einem Rücklesekontakt des jeweiligen Relais 40 bzw. 50 erhaltenes Signal FB1 bzw. FB2. Entsprechend ist die Diagnose- und Vergleichseinheit 34‴ bei dieser Ausführungsform eingerichtet zum Vergleichen eines von einem der beiden Kanäle 28-1 bzw. 28-2 über einen Rücklesekontakt des jeweiligen Relais 40 bzw. 50 erhaltenen Signal FB1 bzw. FB2 mit einem zugehörigen Erwartungswert. Dies geschieht sowohl mithilfe des ersten Mikrocontrollers 36 als auch mithilfe des zweiten Mikrocontrollers 46. Ebenso ist auch bei dieser Ausführungsform die Diagnose- und Vergleichseinheit 34‴ eingerichtet zum optionalen Initiieren eines Fehl-Weiterbetriebsmodus der Auswerteschaltung 28, 28', 28" in Abhängigkeit von einem Ergebnis des Vergleichens.

Dabei ist die Diagnose- und Vergleichseinheit 34‴ bevorzugt so eingerichtet, dass das Initiieren des Fehl-Weiterbetriebsmodus nur erfolgt, wenn sowohl mithilfe des ersten Mikrocontrollers 36 als auch mithilfe des zweiten Mikrocontrollers 46 das Ergebnis des Vergleichens ist, dass das mit dem Erwartungswert verglichene Signal FB1 bzw. FB2, bevorzugt nach Berücksichtigung einer Toleranzabweichung, von dem Erwartungswert abweicht. Bevorzugt ist die Diagnose- und Vergleichseinheit 34‴ so eingerichtet, dass kein Initiieren des Fehl-Weiterbetriebsmodus erfolgt, sondern, bevorzugt nach einer vordefinierten Fehlertoleranzzeit von bspw. etwa 3 s, ein Auslösen eines Fehl-Stop der Auswerteschaltung 28, 28', 28" erfolgt, wenn entweder nur mithilfe des ersten Mikrocontrollers 36 oder nur mithilfe des zweiten Mikrocontrollers 46 das Ergebnis des Vergleichens ist, dass das mit dem Erwartungswert verglichene Signal FB1 bzw. FB2, bevorzugt nach Berücksichtigung einer Toleranzabweichung, von dem Erwartungswert abweicht.

Zusätzlich zeigt die vierte Ausführungsform der Figur 5, dass das erste Relais 40 von dem ersten Mikrocontroller 36 über eine erste Relaissteuerleitung C1 steuerbar ist. Ebenso ist das, bevorzugt in Reihe zu dem ersten Relais 40 geschaltete, zweite Relais 50 von dem zweiten Mikrocontroller 46 über eine zweite Relaissteuerleitung C2 steuerbar.

Diesbezüglich ist in der in Figur 5 dargestellten vierten Ausführungsform des Flammenwächters 2‴ ein Zustand der ersten Relaissteuerleitung C1 über eine erste Relaisrückleseleitung CCR1 zu dem zweiten Mikrocontroller 46 von diesem durch Vergleichen mit einem ersten Relaissteuerleitungserwartungszustand überwachbar. Weiterhin ist ein Zustand der zweiten Relaissteuerleitung C2 über eine zweite Relaisrückleseleitung CCR2 zu dem ersten Mikrocontroller 36 von diesem durch Vergleichen mit einem zweiten Relaissteuerleitungserwartungszustand überwachbar. Bei der in Figur 5 dargestellten vierten Ausführungsform des erfindungsgemäßen Flammenwächters 2‴ erfolgt, bevorzugt nach einer vordefinierten Rücklesefehlertoleranzzeit, ein Auslösen eines Fehl-Stop durch die Auswerteschaltung 28, wenn der Zustand der ersten Relaissteuerleitung C1, bevorzugt nach Berücksichtigung einer Toleranzabweichung, von dem ersten Relaissteuerleitungserwartungszustand, und/oder der Zustand der zweiten Relaissteuerleitung C2, bevorzugt nach Berücksichtigung einer Toleranzabweichung, von dem zweiten Relaissteuerleitungserwartungszustand abweicht.

## Patentansprüche

1. Flammenwächter (2, 2', 2", 2‴) zur Überwachung mindestens eines Teilbereichs (18) einer Brennkammer (1) auf das Vorhandensein einer Flamme (4), aufweisend:
einen Flammensensor (16) zum Erfassen einer physikalischen Größe einer Flamme (4), insbesondere einer Intensität elektromagnetischer Strahlung, und Erzeugen eines zugehörigen elektrischen Sensorsignals (26),
eine dem Flammensensor (16) nachgeschaltete, zweikanalige Auswerteschaltung (28, 28', 28") zum Feststellen, ob das vom Flammensensor (16) erzeugte Sensorsignal (26) einer Flamme (4) entspricht, und zum sicherheitsgerichteten Ausgeben eines das Vorhandensein oder das nicht-Vorhandensein einer Flamme (4) anzeigendem Ausgabesignals (EXTS1),
wobei die zweikanalige Auswerteschaltung (28, 28', 28") aufweist:
einen Analogkreis (30), eine Diagnose- und Vergleichseinheit (34, 34', 34", 34‴), einen Relaiskreis (42, 42‴),
einen zum Verarbeiten des Sensorsignals (26) eingerichteten ersten Kanal (28-1), welcher einen ersten Analog-Digital-Wandler (32) in dem Analogkreis (30), einen der digitalen Diagnose- und Vergleichseinheit (34, 34', 34", 34‴) zugehörigen ersten Mikrocontroller (36) zum Auswerten eines von dem ersten Analog-Digital-Wandler (32) erhaltenen ersten Signals, und ein von dem ersten Mikrocontroller (36) gesteuertes erstes Relais (40) in dem Relaiskreis (42,42‴) umfasst, und
einen zum Verarbeiten des Sensorsignals (26) eingerichteten zweiten Kanal (28-2), welcher einen zweiten Analog-Digital-Wandler (44) in dem Analogkreis (30), einen der digitalen Diagnose- und Vergleichseinheit (34, 34', 34", 34‴) zugehörigen zweiten Mikrocontroller (46) zum Auswerten eines von dem zweiten Analog-Digital-Wandler (44) erhaltenen zweiten Signals, und ein von dem zweiten Mikrocontroller (46) gesteuertes zweites Relais (50) in dem Relaiskreis (42,42‴) umfasst,
wobei die Diagnose- und Vergleichseinheit (34, 34', 34", 34‴) eingerichtet ist
zum Durchführen eines Abgleichs eines ersten Auswerteergebnisses des ersten Mikrocontrollers (36) und eines zweiten Auswerteergebnisses des zweiten Mikrocontrollers (46), und
zum Beeinflussen des Ausgabesignals (EXTS1) in Abhängigkeit von einem Ergebnis des Abgleichs,
**dadurch gekennzeichnet, dass**
die Diagnose- und Vergleichseinheit (34, 34', 34", 34‴) eingerichtet ist
zum Vergleichen eines von einem der beiden Kanäle (28-1, 28-2) erhaltenen Signals (D1, D2; FB1, FB2) mit einem zugehörigen Erwartungswert, sowohl mithilfe des ersten Mikrocontrollers (36) als auch mithilfe des zweiten Mikrocontrollers (46), und
zum optionalen Initiieren eines Fehl-Weiterbetriebsmodus der Auswerteschaltung (28, 28', 28") in Abhängigkeit von einem Ergebnis des Vergleichens.

2. Flammenwächter (2, 2', 2", 2‴) nach Anspruch 1, wobei die Diagnose- und Vergleichseinheit (34, 34', 34", 34‴) eingerichtet ist, dass das Initiieren des Fehl-Weiterbetriebsmodus nur erfolgt, wenn sowohl mithilfe des ersten Mikrocontrollers (36) als auch mithilfe des zweiten Mikrocontrollers (46) das Ergebnis des Vergleichens ist, dass das mit dem Erwartungswert verglichene Signal (D1, D2; FB1, FB2), bevorzugt nach Berücksichtigung einer Toleranzabweichung, von dem Erwartungswert abweicht.

3. Flammenwächter (2, 2', 2", 2‴) nach einem der vorstehenden Ansprüche, wobei die Diagnose- und Vergleichseinheit (34, 34', 34", 34‴) eingerichtet ist, dass kein Initiieren des Fehl-Weiterbetriebsmodus erfolgt, sondern, bevorzugt nach einer vordefinierten Fehlertoleranzzeit von bspw. etwa 3 s, ein Auslösen eines Fehl-Stop der Auswerteschaltung (28, 28', 28") erfolgt, wenn entweder nur mithilfe des ersten Mikrocontrollers (36) oder nur mithilfe des zweiten Mikrocontrollers (46) das Ergebnis des Vergleichens ist, dass das mit dem Erwartungswert verglichene Signal (D1, D2; FB1, FB2), bevorzugt nach Berücksichtigung einer Toleranzabweichung, von dem Erwartungswert abweicht.

4. Flammenwächter (2, 2', 2", 2‴) nach einem der vorstehenden Ansprüche, wobei das von einem der beiden Kanäle (28-1, 28-2) erhaltene Signal ein von dem Analog-Digital-Wandler in diesem Kanal erhaltenes Signal (D1, D2) ist.

5. Flammenwächter (2, 2', 2", 2‴) nach dem vorstehenden Anspruch, mit einem in dem Analogkreis (30) vor dem ersten Analog-Digital-Wandler in dem ersten Kanal (28-1) angeordneten und von der Diagnose- und Vergleichseinheit (34, 34', 34", 34‴) schaltbaren ersten Analogumschalter (AS1), und
mit einem in dem Analogkreis (30) vor dem zweiten Analog-Digital-Wandler in dem zweiten Kanal (28-2) angeordneten und von der Diagnose- und Vergleichseinheit (34, 34', 34", 34‴) schaltbaren zweiten Analogumschalter (AS2),
wobei die Diagnose- und Vergleichseinheit (34, 34', 34", 34‴) eingerichtet ist, mittels Umschalten des ersten und/oder des zweiten Analogumschalters (AS2) dem jeweiligen Analog-Digital-Wandler, bevorzugt begrenzt auf einen vordefinierten Testzeitraum, statt des Sensorsignals (26) ein, bevorzugt eine vordefinierte Amplitude und/oder eine vordefinierte Frequenz aufweisendes, Testsignal (T1) zum Testen dieses Analog-Digital-Wandlers zuzuführen.

6. Flammenwächter (2, 2', 2", 2‴) nach dem vorstehenden Anspruch, wobei
der erste Analogumschalter (AS1) von dem ersten Mikrocontroller (36) über eine erste Steuerleitung (SAS1) umschaltbar ist,
der zweite Analogumschalter (AS2) von dem zweiten Mikrocontroller (46) über eine zweite Steuerleitung (SAS2) umschaltbar ist,
ein Zustand der ersten Steuerleitung (SAS1) über eine erste Rückleseleitung (RAS1) zu dem zweiten Mikrocontroller (46) von diesem durch Vergleichen mit einem ersten Steuerleitungserwartungszustand überwachbar ist,
ein Zustand der zweiten Steuerleitung (SAS2) über eine zweite Rückleseleitung (RAS2) zu dem ersten Mikrocontroller (36) von diesem durch Vergleichen mit einem zweiten Steuerleitungserwartungszustand überwachbar ist, und
wobei, bevorzugt nach einer vordefinierten Rücklesefehlertoleranzzeit, ein Auslösen eines Fehl-Stop der Auswerteschaltung (28, 28', 28") erfolgt, wenn der Zustand der ersten Steuerleitung (SAS1), bevorzugt nach Berücksichtigung einer Toleranzabweichung, von dem ersten Steuerleitungserwartungszustand, und/oder der Zustand der zweiten Steuerleitung (SAS2), bevorzugt nach Berücksichtigung einer Toleranzabweichung, von dem zweiten Steuerleitungserwartungszustand abweicht.

7. Flammenwächter (2, 2', 2", 2‴) nach einem der beiden vorstehenden Ansprüche, wobei in dem ersten Kanal (28-1) ein von der Diagnose- und Vergleichseinheit (34, 34', 34") steuerbarer erster Zusatzanalogumschalter zum Wegschalten des Testsignals (T1) in dem ersten Kanal (28-1), und in dem zweiten Kanal (28-2) ein von der Diagnose- und Vergleichseinheit (34, 34', 34", 34‴) steuerbarer zweiter Zusatzanalogumschalter zum Wegschalten des Testsignals (T1) in dem zweiten Kanal (28-2) vorgesehen ist.

8. Flammenwächter (2, 2', 2", 2‴) nach dem vorstehenden Anspruch, wobei die Diagnose- und Vergleichseinheit (34, 34', 34", 34‴) eingerichtet ist, vor einem Zuschalten des Sensorsignals (26) nach einem Wegschalten des Testsignals (T1) in einem ausgewählten Kanal, mittels beider Mikrocontroller (36, 46) in dem ausgewählten Kanal zu überprüfen, ob das Testsignal (T1) weggeschaltet ist und ob in dem ausgewählten Kanal der jeweilige Zusatzanalogumschalter zum Wegschalten des Testsignals funktioniert.

9. Flammenwächter (2, 2', 2", 2‴) nach einem der vorstehenden Ansprüche, wobei das von einem der beiden Kanäle (28-1, 28-2) erhaltene Signal ein von dem Relais (40, 50) in diesem Kanal (28-1, 28-2) erhaltenes Signal (FB1, FB2) ist.

10. Flammenwächter (2, 2', 2", 2‴) nach dem vorstehenden Anspruch, wobei das von dem Relais (40, 50) erhaltene Signal ein von einem Rücklesekontakt des Relais (40, 50) erhaltenes Signal (FB1, FB2) ist.

11. Flammenwächter (2, 2', 2", 2‴) nach einem der vorstehenden Ansprüche, wobei
das erste Relais (40) von dem ersten Mikrocontroller (36) über eine erste Relaissteuerleitung (C1) steuerbar ist,
das, bevorzugt in Reihe zum ersten Relais (40) geschaltete, zweite Relais (50) von dem zweiten Mikrocontroller (46) über eine zweite Relaissteuerleitung (C2) steuerbar ist,
ein Zustand der ersten Relaissteuerleitung (C1) über eine erste Relaisrückleseleitung (CCR1) zu dem zweiten Mikrocontroller (46) von diesem durch Vergleichen mit einem ersten Relaissteuerleitungserwartungszustand überwachbar ist,
ein Zustand der zweiten Relaissteuerleitung (C2) über eine zweite Relaisrückleseleitung (CCR2) zu dem ersten Mikrocontroller (36) von diesem durch Vergleichen mit einem zweiten Relaissteuerleitungserwartungszustand überwachbar ist, und
wobei, bevorzugt nach einer vordefinierten Rücklesefehlertoleranzzeit, ein Auslösen eines Fehl-Stop der Auswerteschaltung (28, 28', 28") erfolgt, wenn der Zustand der ersten Relaissteuerleitung (C1), bevorzugt nach Berücksichtigung einer Toleranzabweichung, von dem ersten Relaissteuerleitungserwartungszustand, und/oder der Zustand der zweiten Relaissteuerleitung (C2), bevorzugt nach Berücksichtigung einer Toleranzabweichung, von dem zweiten Relaissteuerleitungserwartungszustand abweicht.

12. Flammenwächter (2, 2', 2", 2‴) nach einem der vorstehenden Ansprüche, mit einem in dem Analogkreis (30) angeordneten ersten Verstärker (V1) zum Aufbereiten des Sensorsignals (26) in dem ersten Kanal (28-1) für den ersten Analog-Digital-Wandler (32) und
mit einem in dem Analogkreis (30) angeordneten zweiten Verstärker (V2) zum Aufbereiten des Sensorsignals (26) in dem zweiten Kanal (28-2) für den zweiten Analog-Digital-Wandler (44),
wobei das von einem der beiden Kanäle (28-1, 28-2) erhaltene Signal ein von dem Verstärker in diesem Kanal (28-1, 28-2) erhaltenes Signal (S1, S2) ist.

13. Flammenwächter (2, 2', 2", 2‴) nach dem vorstehenden Anspruch, wobei
der erste Verstärker (V1) von dem ersten Mikrocontroller (36) über eine erste Ansteuerleitung ansteuerbar ist,
der zweite Verstärker (V2) von dem zweiten Mikrocontroller (46) über eine zweite Ansteuerleitung ansteuerbar ist,
ein Zustand der ersten Ansteuerleitung über eine erste Verstärkerrückleseleitung zu dem zweiten Mikrocontroller (46) von diesem durch Vergleichen mit einem ersten Ansteuerleitungserwartungszustand überwachbar ist,
ein Zustand der zweiten Ansteuerleitung über eine zweite Verstärkerrückleseleitung zu dem ersten Mikrocontroller (36) von diesem durch Vergleichen mit einem zweiten Ansteuerleitungserwartungszustand überwachbar ist, und
wobei, bevorzugt nach einer vordefinierten Rücklesefehlertoleranzzeit von bspw. etwa 3 s, ein Auslösen eines Fehl-Stop der Auswerteschaltung (28, 28', 28") erfolgt, wenn der Zustand der ersten Ansteuerleitung, bevorzugt nach Berücksichtigung einer Toleranzabweichung, von dem ersten Ansteuerleitungserwartungszustand, und/oder der Zustand der zweiten Ansteuerleitung, bevorzugt nach Berücksichtigung einer Toleranzabweichung, von dem zweiten Ansteuerleitungserwartungszustand abweicht.

14. Flammenwächter (2, 2', 2", 2‴) nach einem der vorstehenden Ansprüche, wobei die Diagnose- und Vergleichseinheit (34, 34', 34", 34‴) eingerichtet ist, dass das Vergleichen eines von einem der beiden Kanäle (28-1, 28-2) erhaltenen Signals (D1, D2) mit einem zugehörigen Erwartungswert abwechselnd mit einem von dem ersten Kanal (28-1) erhaltenen Signal (D1) und mit einem von dem zweiten Kanal (28-2) erhaltenen Signal (D2) vornehmbar ist.

15. Flammenwächter (2, 2', 2", 2‴) nach einem der vorstehenden Ansprüche, wobei die Diagnose- und Vergleichseinheit (34, 34', 34", 34‴) eingerichtet ist zum Halten des Fehl-Weiterbetriebsmodus für einen vordefinierten Zeitraum, bspw. für einen Zeitraum von etwa 24 h.

16. Flammenwächter (2, 2', 2", 2‴) nach einem der vorstehenden Ansprüche, wobei der Fehl-Weiterbetriebsmodus umfasst, dass die Auswerteschaltung (28, 28', 28") nur noch einkanalig mit dem anderen der beiden Kanäle (28-1, 28-2) arbeitet, oder dass der Fehl-Weiterbetriebsmodus umfasst, dass nur der insbesondere Verstärker (V1, V2) und AD-Wandler (32, 44) umfassende analoge Teil des jeweiligen Kanals (28-1, 28-2) einkanalig ist, während die Datenauswertung des eigentlichen Signals (S1, S2) in der Diagnose- und Auswerteeinheit (34`) weiterhin durch beide Mikrocontroller (36, 46) erfolgt, in dem die von dem vorgenannten analogen Teil des jeweiligen Kanals (28-1, 28-2) stammenden Signale (D1, D2; FB1, FB2) zur Auswertung an beide Mikrocontroller (36, 46) geführt werden.

17. Flammenwächter (2, 2', 2", 2‴) nach dem vorstehenden Anspruch, wobei die Auswerteschaltung (28, 28', 28") nur dann nur noch einkanalig mit dem anderen der beiden Kanäle (28-1, 28-2) arbeitet, wenn die Diagnose- und Vergleichseinheit (34, 34', 34", 34‴) diesen anderen der beiden Kanäle (28-1, 28-2) als fehlerfrei eingestuft hat.

18. Flammenwächter (2, 2', 2", 2‴) nach einem der vorstehenden Ansprüche, wobei die Diagnose- und Vergleichseinheit (34, 34', 34", 34‴) eingerichtet ist zum mehrfachen Vergleichen eines von einem der beiden Kanäle (28-1, 28-2) erhaltenen Signals (D1, D2) mit einem zugehörigen Erwartungswert, sowohl mithilfe des ersten Mikrocontrollers (36) als auch mithilfe des zweiten Mikrocontrollers (46), bevorzugt innerhalb einer vorbestimmten Fehlertoleranzzeit von bspw. etwa 1 s bis etwa 10 s, bevor ein Ergebnis der Vergleiche festgelegt wird.

19. Flammenwächter (2, 2', 2", 2‴) nach einem der vorstehenden Ansprüche, wobei die Diagnose- und Vergleichseinheit (34, 34', 34", 34‴) eingerichtet ist, dann, wenn in einem der beiden Kanäle (28-1, 28-2) festgestellt wird, dass das vom Flammensensor (16) erzeugte Sensorsignal (26) nicht einer Flamme (4) entspricht, das Vergleichen mit einem zugehörigen Erwartungswert, bevorzugt ausschließlich, mit einem von diesem Kanal (28-1, 28-2) erhaltenen Signal (D1, D2; FB1, FB2) durchzuführen.

20. Flammenwächter (2, 2', 2", 2‴) nach einem der vorstehenden Ansprüche, wobei für jeden der beiden Kanäle (28-1, 28-2), zumindest für deren analoge Teile, eine separate Spannungsversorgung vorgesehen ist.

21. Brennkammer (1) mit einem Flammenwächter (2, 2', 2", 2‴) nach einem der vorstehenden Ansprüche.

22. Verfahren zur Überwachung mindestens eines Teilbereichs (18) einer Brennkammer (1) auf das Vorhandensein einer Flamme (4), insbesondere in einer Brennkammer (1) nach Anspruch 21 und/oder mit einem Flammenwächter (2, 2', 2", 2‴) nach einem der Ansprüche 1-20, mit den Schritten:
Erfassen einer physikalischen Größe einer Flamme (4), insbesondere einer Intensität elektromagnetischer Strahlung, mittels eines Flammensensors (16) und Erzeugen eines zugehörigen elektrischen Sensorsignals (26),
Feststellen mittels einer dem Flammensensor (16) nachgeschalteten, zweikanaligen Auswerteschaltung (28, 28', 28"), ob das vom Flammensensor (16) erzeugte Sensorsignal (26) einer Flamme (4) entspricht, und sicherheitsgerichtetes Ausgeben eines das Vorhandensein oder das nicht-Vorhandensein einer Flamme (4) anzeigendem Ausgabesignals (EXTS1),
Verarbeiten des Sensorsignals (26) in einem ersten Kanal (28-1) der Auswerteschaltung (28, 28', 28"), mittels eines ersten Analog-Digital-Wandlers (32) in einem Analogkreis (30), eines einer digitalen Diagnose- und Vergleichseinheit (34, 34', 34", 34‴) zugehörigen ersten Mikrocontrollers (36) zum Auswerten eines von dem ersten Analog-Digital-Wandler (32) erhaltenen ersten Signals, und mittels eines von dem ersten Mikrocontroller (36) gesteuerten ersten Relais in einem Relaiskreis, und
Verarbeiten des Sensorsignals (26) in einem zweiten Kanal (28-2) der Auswerteschaltung (28, 28', 28"), mittels eines zweiten Analog-Digital-Wandlers (44) in dem Analogkreis (30), eines der digitalen Diagnose- und Vergleichseinheit (34, 34', 34", 34‴) zugehörigen zweiten Mikrocontrollers (46) zum Auswerten eines von dem zweiten Analog-Digital-Wandler (44) erhaltenen zweiten Signals, und mittels eines von dem zweiten Mikrocontroller (46) gesteuerten zweiten Relais (50) in dem Relaiskreis (42,42‴),
Durchführen eines Abgleichs eines ersten Auswerteergebnisses des ersten Mikrocontrollers (36) und eines zweiten Auswerteergebnisses des zweiten Mikrocontrollers (46), und Beeinflussen des Ausgabesignals (EXTS1) in Abhängigkeit von einem Ergebnis des Abgleichs,
**gekennzeichnet durch**
Vergleichen eines von einem der beiden Kanäle (28-1, 28-2) erhaltenen Signals (D1, D2; FB1, FB2) mit einem zugehörigen Erwartungswert, sowohl mithilfe des ersten Mikrocontrollers (36) als auch mithilfe des zweiten Mikrocontrollers (46), und
optionales Initiieren eines Fehl-Weiterbetriebsmodus der Auswerteschaltung (28, 28', 28") in Abhängigkeit von einem Ergebnis des Vergleichens.

## Claims

1. A flame detector (2, 2', 2", 2‴) for monitoring at least one partial region (18) of a combustion chamber (1) for the presence of a flame (4), comprising:
a flame sensor (16) for detecting a physical magnitude of a flame (4), in particular an intensity of electromagnetic radiation, and for generating an associated electrical sensor signal (26),
a two-channel evaluations circuit (28, 28', 28") downstream of the flame sensor (16) for ascertaining whether the sensor signal (26) generated by the flame sensor (16) corresponds to a flame (4), and for the safety-directed outputting of an output signal (EXTS1) indicating the presence or the non-presence of a flame (4),
wherein the two-channel evaluation circuit (28, 28', 28") comprises:
an analogue circuit (30), a diagnosis and comparison unit (34, 34', 34", 34‴), a relay circuit (42, 42"), a first channel (28-1) configured for processing the sensor signal (26), which comprises a first analogue-digital converter (32) in the analogue circuit (30), a first microcontroller (36) assigned to the digital diagnosis and comparison unit (34, 34', 34", 34‴) for evaluating a first signal received by the first analogue-digital converter (32), and a first relay (40) controlled by the first microcontroller (36) in the relay circuit (42, 42''), and
a second channel (28-2) configured for processing the sensor signal (26), which comprises a second analogue-digital converter (44) in the analogue circuit (30), a second microcontroller (46) assigned to the digital diagnosis and comparison unit (34, 34', 34'', 34‴) for evaluating a second signal received by the second analogue-digital converter (44), and a second relay (50) controlled by the second microcontroller (46) in the relay circuit (42, 42''),
wherein the diagnosis and comparison unit (34, 34', 34" , 34‴) is configured to carry out a reconciliation of a first evaluation result of the first microcontroller (36) and a second evaluation result of the second microcontroller (46), and for influencing the output signal (EXTS1) depending on a result of the reconciliation,
**characterised in that**
the diagnosis and comparison unit (34, 34', 34", 34‴) is configured to compare one signal (D1, D2, FB1, FB2) received by one of the two channels (28-1, 28-2) with the associated expectation value, both with the aid of the first microcontroller (36) and also with the aid of the second microcontroller (46), and
for the optional initiation of a fail further operation mode of the evaluation circuit (28, 28', 28") depending on the result of the reconciliation.

2. The flame detector (2, 2', 2", 2‴) according to claim 1, wherein the diagnosis and comparison unit (34, 34', 34", 34‴) is configured such that the initiation of the fail further operation mode only takes place if, both with the aid of the first microcontroller (36) and also with the aid of the second microcontroller (46), the result of the comparison is that the signal (D1, D2, FB1, FB2) compared to the expectation value, preferably after taking account of a tolerance deviation, deviates from the expectation value.

3. The flame detector (2, 2', 2", 2‴) according to any one of the preceding claims, wherein the diagnosis and comparison unit (34, 34', 34", 34‴) is configured such that no initiation of the fail further operation mode takes place, but, preferably after a predefined fail error tolerance time of for example around 3 s, triggering of a fail-stop of the evaluation circuit (28, 28', 28") takes place if, either only with the aid of the first microcontroller (36) or only with the aid of the second microcontroller (46), the result of the comparison is that the signal (D1, D2; FB1, FB2) compared with the expectation value, preferably after taking account of a tolerance deviation, diverges from the expectation value.

4. The flame detector (2, 2', 2", 2''') according to any one of the preceding claims, wherein the signal received from one of the two channels (28-1, 28-2) is a signal (D1, D2) received from the analogue-digital converter in this channel.

5. The flame detector (2, 2', 2", 2‴) according to the preceding claim, with a first analogue switch (AS1) arranged in the analogue-digital circuit (30) before the first analogue-digital converter in the first channel (28-1) and switchable by the diagnosis and comparison unit (34, 34', 34", 34‴), and with a second analogue switch (AS2) arranged in the analogue circuit (30) before the second analogue-digital converter in the second channel (28-2) and switchable by the diagnosis and comparison unit (34, 34', 34'', 34‴),
wherein the diagnosis and comparison unit (34, 34', 34", 34‴) is configured, by means of switching over the first and/or the second analogue switch (AS2), to fed a test signal (T1), preferably having a predefined amplitude and/or a predefined frequency, instead of the sensor signal (26), to the respective analogue-digital converter for the purpose of testing this analogue-digital converter.

6. The flame detector (2, 2', 2", 2‴) according to the preceding claim, wherein the first analogue switch (AS1) can be switched over by the first microprocessor (36) via a control line (SAS1),
the second analogue switch (AS2) can be switched over by the second microcontroller (46) via a second control line (SAS2),
a state of the first control line (SAS1) can be monitored, via a first read-back line (RAS1) to the second microcontroller (46), by the latter by comparison with a first control line expectation state,
a state of the second control line (SAS2) can be monitored, via a read-back line (RAS2) to the first microcontroller (36), by the latter by comparison with a second control line expectation value,
and
wherein, preferably after a predefined read-back error tolerance time, triggering of a fail-stop of the evaluation circuit (28, 28', 28") takes place if the first state of the first control line (SAS1) deviates, preferably after taking account of a tolerance deviation, from the first control line expectation value, and/or the state of the second control line (SAS2) deviates, preferably after taking account of a tolerance deviation, from the second control line expectation state.

7. The flame detector (2, 2', 2", 2‴) according to one of the two preceding claim,
wherein a first additional analogue switch switchable by the diagnosis and comparison unit (34, 34', 34") in the first channel (28-1) for switching off the test signal (T1) is provided in the first channel (28-1), and a second additional analogue switch switchable by the diagnosis and comparison unit (34, 34', 34", 34‴) in the second channel (28-2) for switching off the test signal (T1) is provided in the second channel (28-2).

8. The flame detector (2, 2', 2", 2‴) according to the preceding claim,
wherein the diagnosis and comparison unit (34, 34', 34", 34‴) is configured, before switching-on of the sensor signal (26) after switching-off of the test signal (T1) in a selected channel, to verify by means of both microcontrollers (36, 46) in the selected channel whether the test signal (T1) is switched-off and whether the respective additional analogue switch for switching-off the test signal functions in the selected channel.

9. The flame detector (2, 2', 2", 2‴) according to any one of the preceding claims,
wherein the signal received from one of the two channels (28-1, 28-2) is a signal (FB1, FB2) received from the relay (40, 50) in this channel (28-1, 28-2).

10. The flame detector (2, 2', 2", 2‴) according to the preceding claim,
wherein the signal received from the relay (40, 50) is a signal (FB1, FB2) received from a read-back contact of the relay (40, 50).

11. The flame detector (2, 2', 2", 2‴) according to any one of the preceding claims,
wherein
the first relay (40) can be controlled by the first microcontroller (36) via a first relay control line (C1),
the second relay (50), preferably connected in series with the first relay (40), can be controlled by the second microcontroller (46) via a second relay control line (C2),
a state of the first relay control line (C1) can be monitored, via a first relay read-back line (CCR1) to the second microcontroller (46), by the latter by comparison with a first relay control line expectation state,
a state of the second relay control line (C2) can be monitored, via a second relay read-back line (CCR2) to the first microcontroller (36), by the latter by comparison with a second relay control line expectation state, and
wherein, preferably after a predefined read-back error tolerance time, triggering of a fail-stop of the evaluation circuit (28, 28', 28'') takes place, if the state of the first relay control line (C1), preferably after taking account of a tolerance deviation, deviates from the first relay control line expectation state, and/or the state of the second relay control line (C2), preferably after taking account of a tolerance deviation, deviates from the second relay control line expectation state.

12. The flame detector (2, 2', 2", 2‴) according to any one of the preceding claims, with a first amplifier (V1) arranged in the analogue circuit (30) for processing the sensor signal (26) in the first channel (28-1) for the first analogue-digital converter (32) and
with a second amplifier (V2) arranged in the analogue circuit (30) for processing the sensor signal (26) in the second channel (28-2) for the second analogue-digital converter (44),
wherein the signal received from one of the two channels (28-1, 28-2) is a signal (S1, S2) received from the amplifier in this channel (28-1, 28-2).

13. The flame detector (2, 2', 2", 2‴) according to the preceding claim, wherein the first amplifier (V1) can be controlled by the first microcontroller (36) via a first control line,
the second amplifier (V2) can be controlled by the second microcontroller (46) via a second control line,
a state of the first control line can be monitored, via a first amplifier read-back line to the second microcontroller (46), by the latter by comparison with a first control line expectation state,
a state of the second control line can be monitored, via a second amplifier read-back line to the first microcontroller (36), by the latter by comparison with a second control line expectation state, and
wherein, preferably after a predefined read-back error tolerance time of for example around 3s, triggering of a fail-stop of the evaluation circuit (28, 28', 28'') takes place when the state of the first control line, preferably after taking account of a tolerance deviation, deviates from the first control expectation state, and/or the state of the second control line, preferably after taking account of a tolerance deviation, deviates from the second control line expectation state.

14. The flame detector (2, 2', 2", 2‴) according to any one of the preceding claims, wherein the diagnosis and comparison unit (34, 34', 34", 34‴) is configured such that the comparison of a signal (D1, D2) received from one of the two channels (28-1, 28-2) with an associated expectation value can be carried out alternately with a signal (D1) received from the first channel (28-1) and with a signal (D2) received from the second channel (28-2).

15. The flame detector (2, 2', 2", 2‴) according to any one of the preceding claims, wherein the diagnosis and comparison unit (34, 34', 34", 34‴) is configured to hold the fail further operation mode for a predefined period, for example for a period of around 24 h.

16. The flame detector (2, 2', 2", 2‴) according to any one of the preceding claims, wherein the fail further operation mode includes the fact that the evaluation circuit (28, 28', 28) only operates single-channel with the other of the two channels (28-1, 28-2) or that the fail continue operation mode includes the fact that only the analogue part of the respective channel (28-1, 28-2) comprising in particular amplifiers (V1, V2) and AD converter (32, 44) is single-channel, whereas the data evaluation of the actual signal (S1, S2) in the diagnosis and evaluation unit (34) continues to take place by both microcontrollers (36, 46), in that the signals (D1, D2; FB1, FB2) originating from the aforementioned analogue part of the respective channel (28-1, 28-2) are fed for evaluation at both microcontrollers (36, 46).

17. The flame detector (2, 2', 2", 2‴) according to the preceding claim, wherein the evaluation circuit (28, 28', 28") only operates single-channel with the other of the two channels (28-1, 28-2) when the diagnosis and comparison unit (34, 34', 34", 34") has classified this other of the two channels (28-1, 28-2) is defective.

18. The flame detector (2, 2', 2", 2‴) according to any one of the preceding claims, wherein the diagnosis and comparison unit (34, 34', 34", 34‴) is configured to repeatedly compare one of signals (D1, D2) received from one of the two channels (28-1, 28-2) with the associated expectation value, both with the aid of the first microcontroller (36) as well as with the aid of the second microcontroller (46), preferably within a predefined error tolerance time of for example around 1 s to around 10 s, before a result of the comparison is ascertained.

19. The flame detector (2, 2', 2", 2‴) according to any one of the preceding claims, wherein the diagnosis and comparison unit (34, 34', 34", 34‴) is configured, when it is ascertained in one of the two channels (28-1, 28-2) that the sensor signal (26) generated by the flame sensor (16) does not correspond to a flame (4), to carry out the comparison with the associated expectation value, preferably exclusively, with a signal (D1, D2; FB1, FB2) received from this channel (28-1, 28-2).

20. The flame detector (2, 2', 2", 2‴) according to any one of the preceding claims, wherein a separate voltage supply is provided for each of the two channels (28-1, 28-2), at least for their analogue parts.

21. A combustion chamber (1) with a flame detector (2, 2', 2", 2‴) according to any one of the preceding claims.

22. A method for monitoring at least one partial region (18) of a combustion chamber (1) for the presence of a flame (4), in particular in a combustion chamber (1) according to claim 21 and/or a flame detector (2, 2', 2'', 2''') according to any one of claims 1-20, with the steps:
detection of a physical magnitude of a flame (4), in particular of an intensity of electromagnetic radiation, by means of a flame sensor (16) and generating an associated electrical sensor signal (26),
ascertaining by means of a double-channel evaluation circuit (28, 28', 28'') downstream of the flame sensor (16) whether the sensor signal (26) generated by the flame sensor (16) corresponds to a flame (4), and safety-directed outputting of an output signal (EXTS1) indicating the presence or the non-presence of a flame (4),
processing of the sensor signal (26) in a first channel (28-1) of the evaluation circuit (28, 28', 28"), by means of a first analogue-digital converter (32) in an analogue circuit (30), a first microcontroller (36) assigned to a digital diagnosis and comparison unit (34, 34", 34‴) for evaluating a first signal received from the first analogue-digital converter (32) and by means of a first relay controlled by the first microcontroller (36) in a relay circuit, and
processing of the sensor signal (26) in a second channel (28-2) of the evaluation circuit (28, 28', 28''), by means of a second analogue-digital converter (44) in the analogue circuit (30), a second microcontroller (46) assigned to the digital diagnosis and comparison unit (34, 34', 34", 34‴) for evaluating a second signal received from the second analogue-digital converter (44), and by means of a second relay (50) controlled by the second microcontroller (46) in the relay circuit (42, 42''),
carrying out a reconciliation of a first evaluation result of the first microcontroller (36) and a second evaluation result of the second microcontroller (46), and influencing of the output signal (EXTS1) depending on a result of the reconciliation,
**characterised by**
comparison of a signal (D1, D2; FB1, FB2) received from one of the two channels (28-1, 28-2) with an associated expectation value, both with the aid of the first microcontroller (36) and also with the aid of the second microcontroller (46) and
the optional initiation of a fail further operation mode of the evaluation circuit (28, 28', 28") depending on a result of the comparison.

## Revendications

1. Contrôleur de flamme (2, 2', 2", 2‴), destiné à superviser au moins une zone partielle (18) d'une chambre de combustion (1) au niveau de la présence d'une flamme (4), comportant :
un capteur de flamme (16), destiné à détecter une grandeur physique d'une flamme (4), notamment une intensité d'un rayonnement électromagnétique et à générer un signal électrique de capteur (26) connexe,
un circuit d'évaluation (28, 28', 28") à deux canaux, monté en aval du capteur de flamme (16), destiné à constater si le signal de capteur (26) généré par le capteur de flamme (16) correspond à une flamme (4) et à délivrer en exécution sécurisée un signal de sortie (EXTS1) signalant la présence ou la non-présence d'une flamme (4),
le circuit d'évaluation (28, 28', 28") à deux canaux comportant :
un circuit analogique (30), une unité de diagnostic et de comparaison (34, 34', 34", 34"'), un circuit de relais (42,42‴),
un premier canal (28-1), configuré pour traiter le signal de capteur (26), lequel comprend un premier convertisseur analogique / numérique (32) dans le circuit analogique (30), un premier microcontrôleur (36) appartenant à l'unité numérique de diagnostic et de comparaison (34, 34', 34", 34‴), destiné à évaluer un premier signal obtenu de la part du premier convertisseur analogique / numérique (32) et un premier relais (40), commandé par le premier microcontrôleur (36) dans le circuit de relais (42,42‴) et
un deuxième canal (28-2), configuré pour traiter le signal de capteur (26), lequel comprend un deuxième convertisseur analogique / numérique (44) dans le circuit analogique (30), un deuxième microcontrôleur (46) appartenant à l'unité de diagnostic et de comparaison (34, 34', 34", 34‴), destiné à évaluer un deuxième signal, obtenu de la part du deuxième convertisseur analogique / numérique (44) et un deuxième relais (50), commandé par le deuxième microcontrôleur (46) dans le circuit de relais (42,42‴),
l'unité de diagnostic et de comparaison (34, 34', 34", 34‴) étant configurée pour procéder à la comparaison d'un premier résultat d'évaluation du premier microcontrôleur (36) et d'un deuxième résultat d'évaluation du deuxième microcontrôleur (46) et pour influencer le signal de sortie (EXTS1) en fonction du résultat de la comparaison,
**caractérisé en ce que**
l'unité de diagnostic et de comparaison (34, 34', 34", 34‴) est configurée pour comparer un signal (D1, D2 ; FB1, FB2) obtenu de la part de l'un des deux canaux (28-1, 28-2) avec une valeur attendue, aussi bien à l'aide du premier microcontrôleur (36) qu'également à l'aide du deuxième microcontrôleur (46) et
pour initier en option un mode de fonctionnement en défaut du circuit d'évaluation (28, 28', 28") en fonction d'un premier résultat de la comparaison.

2. Contrôleur de flamme (2, 2', 2", 2‴) selon la revendication 1,
l'unité de diagnostic et de comparaison (34, 34', 34", 34‴) étant configurée de sorte que l'initiation du mode de fonctionnement en défaut n'ait lieu que si aussi bien à l'aide du premier microcontrôleur (36) qu'également à l'aide du deuxième microcontrôleur (46), le résultat de la comparaison est que le signal (D1, D2 ; FB1, FB2) comparé avec la valeur attendue diverge de la valeur attendue, de préférence sous prise en considération d'un écart de tolérance.

3. Contrôleur de flamme (2, 2', 2", 2‴) selon l'une quelconque des revendications précédentes,
l'unité de diagnostic et de comparaison (34, 34', 34", 34‴) étant configurée de sorte qu'aucune initiation du mode de fonctionnement en défaut n'ait lieu, mais que, de préférence après un temps de tolérance prédéfini en défaut d'environ 3 secondes, un arrêt en défaut du circuit d'évaluation (28, 28', 28") ait lieu, si soit uniquement à l'aide du premier microcontrôleur (36) ou uniquement à l'aide du deuxième microcontrôleur (46), le résultat de la comparaison est que le signal (D1, D2 ; FB1, FB2) comparé avec la valeur attendue diverge de la valeur attendue, de préférence sous prise en considération d'un écart de tolérance.

4. Contrôleur de flamme (2, 2', 2", 2‴) selon l'une quelconque des revendications précédentes,
le signal obtenu par l'un des deux canaux (28-1, 28-2) étant un signal (D1, D2) obtenu de la part du convertisseur analogique / numérique dans ledit canal.

5. Contrôleur de flamme (2, 2', 2", 2‴),
pourvu d'un premier inverseur analogique (AS1) placé dans le circuit analogique (30), dans le premier canal (28-1), en amont du premier convertisseur analogique / numérique et commutable par l'unité de diagnostic et de comparaison (34, 34', 34", 34"') et pourvu d'un deuxième inverseur analogique (AS2), placé dans le circuit analogique (30), dans le deuxième canal (28-2), en amont du deuxième convertisseur analogique / numérique et commutable par l'unité de diagnostic et de comparaison (34, 34', 34", 34"'),
l'unité de diagnostic et de comparaison (34, 34', 34", 34‴) étant configurée pour amener par commutation du premier et / ou du deuxième inverseur analogique (AS2) vers le convertisseur analogique / numérique concerné, de préférence de manière limitée à une période de test préfinie, au lieu du signal de capteur (26), un signal de test (T1), présentant de préférence une amplitude prédéfinie et / ou une fréquence prédéfinie, pour tester ledit convertisseur analogique / numérique.

6. Contrôleur de flamme (2, 2', 2", 2‴) selon la revendication précédente, le premier inverseur analogique (AS1) étant susceptible d'être commuté par le premier microcontrôleur (36), par l'intermédiaire d'une première ligne de commande (SAS1),
le deuxième inverseur analogique (AS2) étant susceptible d'être commuté par le deuxième microcontrôleur (46), par l'intermédiaire d'une deuxième ligne de commande (SAS2),
un état de la première ligne de commande (SAS1) étant susceptible d'être supervisé par l'intermédiaire d'une première ligne de relecture (RAS1) donnant vers le deuxième microcontrôleur (46) par ce dernier, par comparaison avec un premier état attendu de la ligne de commande,
un état de la deuxième ligne de commande (SAS2) étant susceptible d'être supervisé par l'intermédiaire d'une deuxième ligne de relecture (RAS2) donnant vers le premier microcontrôleur (36) par ce dernier, par comparaison avec un deuxième état attendu de la ligne de commande
et
de préférence, après un temps de tolérance prédéfini de défaut de relecture, un arrêt en défaut du circuit d'évaluation (28, 28', 28") étant déclenché si l'état de la première ligne de commande (SAS1) diverge de préférence sous considération d'un écart de tolérance par rapport à l'état attendu de la première ligne de commande et / ou si l'état de la deuxième ligne de commande (SAS2) diverge de préférence sous considération d'un écart de tolérance par rapport à l'état attendu de la deuxième ligne de commande.

7. Contrôleur de flamme (2, 2', 2", 2‴) selon l'une quelconque des deux revendications précédentes,
dans le premier canal (28-1) étant prévu un premier inverseur analogique supplémentaire, susceptible d'être commandé par l'unité de diagnostic et de comparaison (34, 34', 34"), destiné à supprimer le signal de test (T1) dans le premier canal (28-1) et dans le deuxième canal (28-2) étant prévu un deuxième inverseur analogique supplémentaire, susceptible d'être commandé par l'unité de diagnostic et de comparaison (34, 34', 34", 34‴), destiné à supprimer le signal de test (T1) dans le deuxième canal (28-2).

8. Contrôleur de flamme (2, 2', 2", 2‴) selon la revendication précédente,
l'unité de diagnostic et de comparaison (34, 34', 34", 34‴) étant configurée pour vérifier dans un canal sélectionné, avant une activation du signal de capteur (26), après une suppression du signal de test (T1), au moyen des deux microcontrôleurs (36, 46) si le signal de test (T1) est supprimé et si dans le canal sélectionné, l'inverseur analogique supplémentaire concerné, destiné à supprimer le signal de test fonctionne.

9. Contrôleur de flamme (2, 2', 2", 2‴) selon l'une quelconque des revendications précédentes,
le signal obtenu par l'un des deux canaux (28-1, 28-2) étant un signal (FB1, FB2) obtenu par le relais (40, 50) dans ledit canal (28-1, 28-2).

10. Contrôleur de flamme (2, 2', 2", 2‴) selon la revendication précédente,
le signal obtenu par le relais (40, 50) étant un signal (FB1, FB2) obtenu par un contact de relecture du relais (40, 50).

11. Contrôleur de flamme (2, 2', 2", 2‴) selon l'une quelconque des revendications précédentes,
le premier relais (40) étant susceptible d'être commandé par le premier microcontrôleur (36) par l'intermédiaire d'une première ligne de commande de relais (C1),
le deuxième relais (50), monté de préférence en série par rapport au premier relais (40) étant susceptible d'être commandé par le deuxième microcontrôleur (46), par l'intermédiaire d'une deuxième ligne de commande de relais (C2),
un état de la première ligne de commande de relais (C1) étant susceptible d'être supervisé par une première ligne de relecture de relais (CCR1) donnant vers le deuxième microcontrôleur (46), par ce dernier, par comparaison avec un premier état attendu de la première ligne de commande de relais,
un état de la deuxième ligne de commande de relais (C2) étant susceptible d'être supervisé par une deuxième ligne de relecture de relais (CCR2) donnant vers le premier microcontrôleur (36), par ce dernier, par comparaison avec un deuxième état attendu de la deuxième ligne de commande de relais et
de préférence, après un temps de tolérance prédéfini de défaut de relecture, un arrêt en défaut du circuit d'évaluation (28, 28', 28") étant déclenché si l'état de la première ligne de commande de relais (C1), diverge de préférence sous considération d'un écart de tolérance par rapport à l'état attendu du relais de la première ligne de commande de relais, et / ou si l'état de la deuxième ligne de commande de relais (C2) diverge, de préférence sous considération d'un écart de tolérance par rapport à l'état attendu de la deuxième ligne de commande de relais.

12. Contrôleur de flamme (2, 2', 2", 2‴) selon l'une quelconque des revendications précédentes,
pourvu d'un premier amplificateur (V1) placé dans le circuit analogique (30), destiné à préparer le signal de capteur (26) dans le premier canal (28-1) pour le premier convertisseur analogique / numérique (32) et
pourvu d'un deuxième amplificateur (V2) placé dans le circuit analogique (30), destiné à préparer le signal de capteur (26) dans le deuxième canal (28-2) pour le deuxième convertisseur analogique / numérique (44),
le signal obtenu de la part de l'un des deux canaux (28-1, 28-2) étant un signal (S1, S2) obtenu par l'amplificateur dans ledit canal (28-1, 28-2).

13. Contrôleur de flamme (2, 2', 2", 2‴) selon la revendication précédente, i le premier amplificateur (V1) étant susceptible d'être activé par le premier microcontrôleur (36) par l'intermédiaire d'une première ligne d'activation,
le deuxième amplificateur (V2) étant susceptible d'être activé par le deuxième microcontrôleur (46) par l'intermédiaire d'une deuxième ligne d'activation,
un état de la première ligne d'activation étant susceptible d'être supervisé par l'intermédiaire d'une première ligne de relecture d'amplificateur donnant vers le deuxième microcontrôleur (46), par ce dernier, par comparaison avec un premier état attendu de la première ligne d'activation,
un état de la deuxième ligne d'activation étant susceptible d'être supervisé par l'intermédiaire d'une deuxième ligne de relecture d'amplificateur donnant vers le premier microcontrôleur (36), par ce dernier, par comparaison avec un deuxième état attendu de la deuxième ligne d'activation et
de préférence après un temps de tolérance prédéfini de défaut de relecture d'environ 3 secondes par exemple, un arrêt en défaut du circuit d'évaluation (28, 28', 28") étant déclenché si l'état de la première ligne d'activation diverge, de préférence sous considération d'un écart de tolérance de l'état attendu de la première ligne d'activation et / ou si l'état de la deuxième ligne d'activation diverge, de préférence sous considération d'un écart de tolérance de l'état attendu de la deuxième ligne d'activation.

14. Contrôleur de flamme (2, 2', 2", 2‴) selon l'une quelconque des revendications précédentes,
l'unité de diagnostic et de comparaison (34, 34', 34", 34‴) étant configurée de sorte que la comparaison d'un signal (D1, D2) obtenu par l'un des deux canaux (28-1, 28-2) puisse être réalisée avec une valeur attendue connexe, alternativement avec un signal (D1) obtenu par le premier canal (28-1) et avec un signal (D2) obtenu par le deuxième canal (28-2).

15. Contrôleur de flamme (2, 2', 2", 2‴) selon l'une quelconque des revendications précédentes,
l'unité de diagnostic et de comparaison (34, 34', 34", 34‴) étant configurée pour maintenir le mode de fonctionnement en défaut sur une période prédéfinie, par exemple pour sur une période d'environ 24 h.

16. Contrôleur de flamme (2, 2', 2", 2‴) selon l'une quelconque des revendications précédentes,
le mode de fonctionnement en défaut comprenant que le circuit d'évaluation (28, 28', 28") ne fonctionne plus que via un canal avec l'autre des deux canaux (28-1, 28-2) ou le mode de fonctionnement en défaut comprenant que seulement la partie analogique du canal (28-1, 28-2) concerné qui comprend notamment l'amplificateur (V1, V2) et le convertisseur AN (32, 44) soit à un seul canal, alors que l'évaluation des données du signal (S1, S2) proprement dit continue à être réalisée dans l'unité de diagnostic et d'évaluation (34') par les deux microcontrôleurs (36, 46), en ce que les signaux (D1, D2 ; FB1, FB2) provenant de la partie analogique précitée du canal (28-1, 28-2) concerné sont conduits pour l'évaluation vers les deux microcontrôleurs (36, 46) .

17. Contrôleur de flamme (2, 2', 2", 2‴) selon la revendication précédente,
le circuit d'évaluation (28, 28', 28") ne fonctionnant qu'avec un canal avec l'autre des deux canaux (28-1, 28-2) que lorsque l'unité de diagnostic et de comparaison (34, 34', 34", 34"') a classifié ledit autre des deux canaux (28-1, 28-2) comme étant exempt de défaut.

18. Contrôleur de flamme (2, 2', 2", 2‴) selon l'une quelconque des revendications précédentes,
l'unité de diagnostic et de comparaison (34, 34', 34", 34‴) étant configurée pour la comparaison multiple d'un signal (D1, D2) obtenu par l'un des deux canaux (28-1, 28- 2) avec une valeur attendue connexe, aussi bien à l'aide du premier microcontrôleur (36) qu'également à l'aide du deuxième microcontrôleur (46), de préférence dans un temps de tolérance d'erreur prédéfini d'environ 1 seconde à environ 10 secondes par exemple, avant qu'un résultat des comparaisons soit déterminé.

19. Contrôleur de flamme (2, 2', 2", 2‴) selon l'une quelconque des revendications précédentes,
l'unité de diagnostic et de comparaison (34, 34', 34", 34‴) étant configurée pour lorsqu'il est constaté dans l'un des deux canaux (28-1, 28-2) que le signal de capteur (26) généré par le capteur de flamme (16) ne correspond pas à une flamme (4), procéder à la comparaison avec une valeur attendue connexe de préférence exclusivement avec un signal (D1, D2 ; FB1, FB2) obtenu par ledit canal (28-1, 28-2).

20. Contrôleur de flamme (2, 2', 2", 2‴) selon l'une quelconque des revendications précédentes,
pour chacun des deux canaux (28-1, 28-2) étant prévue au moins pour leurs parties analogiques une alimentation en tension séparée.

21. Chambre de combustion (1), pourvue d'un contrôleur de flamme (2, 2', 2", 2‴) selon l'une quelconque des revendications précédentes.

22. Procédé, destiné à superviser au moins une zone partielle (18) d'une chambre de combustion (1) au niveau de la présence d'une flamme (4), notamment dans une chambre de combustion (1) selon la revendication 21 et / ou pourvue d'un contrôleur de flamme (2, 2', 2", 2"') selon l'une quelconque des revendications 1 à 20, avec les étapes consistant à :
détecter une grandeur physique d'une flamme (4), notamment une intensité d'un rayonnement électromagnétique au moyen d'un capteur de flamme (16) et générer un signal électrique de capteur (26) connexe,
constater au moyen d'un circuit d'évaluation (28, 28', 28") à deux canaux, monté en aval du capteur de flamme (16) si le signal de capteur (26) généré par le capteur de flamme (16) correspond à une flamme (4) et délivrer en exécution sécurisée un signal de sortie (EXTS1), signalant la présence ou la non-présence d'une flamme (4),
traiter le signal de capteur (26) dans un premier canal (28-1) du circuit d'évaluation (28, 28', 28"), au moyen d'un premier convertisseur analogique / numérique (32) dans un circuit analogique (30), d'un premier microcontrôleur (36) appartenant à une unité numérique de diagnostic et de comparaison (34, 34', 34", 34‴), destinée à évaluer un premier signal, obtenu de la part du premier convertisseur analogique / numérique (32) et au moyen d'un premier relais commandé par le premier microcontrôleur (36) dans un circuit de relais et
traiter le signal de capteur (26) dans un deuxième canal (28-2) du circuit d'évaluation (28, 28', 28"), au moyen d'un deuxième convertisseur analogique / numérique (44) dans le circuit analogique (30), d'un deuxième microcontrôleur (46) appartenant à l'unité numérique de diagnostic et de comparaison (34, 34', 34", 34‴), destinée à évaluer un deuxième signal obtenu de la part du deuxième convertisseur analogique / numérique (44) et au moyen d'un deuxième relais (50) commandé par le deuxième microcontrôleur (46) dans le circuit de relais (42,42"'),
procéder à une comparaison d'un premier résultat d'évaluation du premier microcontrôleur (36) et d'un deuxième résultat d'évaluation du deuxième microcontrôleur (46) et influencer le signal de sortie (EXTS1) en fonction d'un résultat de la comparaison,
**caractérisé par**
une comparaison d'un signal (D1, D2 ; FB1, FB2) obtenu par l'un des deux canaux (28-1, 28-2) avec une valeur attendue connexe, aussi bien à l'aide du premier microcontrôleur (36) qu'également à l'aide du deuxième microcontrôleur (46) et
initier en option un mode de fonctionnement en défaut du circuit d'évaluation (28, 28', 28") en fonction d'un résultat de la comparaison.
